# EUROPÄISCHE PATENTANMELDUNG

(11) **EP 1 269 817 A2**
(43) Veröffentlichungstag der Anmeldung: **02.01.2003**
(21) Anmeldenummer: 02013062.1
(22) Anmeldetag: 13.06.2002
(51) Int. Cl.: A01C 17/00

(54) **Verfahren und Zentrifugalstreuer zum Verteilen von Streugut**

(30) Priorität: 18.06.2001 DE 10128941
(71) Anmelder: RAUCH LANDMASCHINENFABRIK GMBH, D-76547 Sinzheim (DE)
(72) Erfinder: Rauch, Norbert, 76547 Sinzheim (DE)
(74) Vertreter: Lichti, Heiner, Dipl.-Ing.

(57) **Zusammenfassung**

Zum Verteilen von Streugut mittels eines Zentrifugalstreuers mit einem Streugut-Behälter und wenigstens zwei gegensinnig umlaufenden, mit Wurfflügeln (8,9) versehenen Streuscheiben (4,5) wird das Streugut über jeweils wenigstens ein steuerbares Dosierorgan am Behälter auf einen wurfflügelfreien inneren Bereich (12,13) der Streuscheibe (4,5) aufgegeben, wo es sich im Zentrifugalfeld der Streuscheibe ausbreitet, bis es von einem Wurfflügel erfasst, nach außen beschleunigt und an dessen äußerem Ende (10) unter einem großen Streuwinkel abgeben wird. Die Ausbreitung des Streugutes auf der wurfflügelfreien Fläche (12,13) der Streuscheibe wird auf einen Ringsektor (25,26) mit einem auf den größten Streuwinkel (α,β) abgestimmten Sektorwinkel (γ) begrenzt. Zur einseitigen Reduzierung der Überlappung der Streufächer wird der Streuwinkel wenigstens einer Streuscheibe (4,5) durch Steuerung des Sektorwinkels (γ) von innen nach außen verkleinert und zugleich der Streuwinkel und/oder die Streubreite an der anderen Streuscheibe reduziert. Ferner ist ein Zentrifugalstreuer mit der vorgenannten Arbeitsweise beschrieben.

## Beschreibung

Die Erfindung betrifft ein Verfahren mit den Merkmalen des Oberbegriffs des Anspruchs 1 und einen Zentrifugalstreuer mit den Merkmalen des Oberbegriffs des Anspruchs 19.

Zentrifugalstreuer dienen insbesondere zum Verteilen von Dünger auf landwirtschaftlichen Anbauflächen oder von Winter-Streumitteln auf Verkehrsflächen. Beim Verteilen von Dünger werden aus Umweltschutzgründen und aufgrund des Kostendrucks, dem die landwirtschaftlichen Betriebe ausgesetzt sind, eine hohe Verteilgenauigkeit des Düngers gefordert, und zwar bei allen Betriebsarten des zur Verteilung dienenden Streuers.

Bei der Düngerverteilung haben sich heute im Wesentlichen Zweischeibenstreuer durchgesetzt, die einerseits die Voraussetzung für eine hohe Verteilgenauigkeit bieten, andererseits eine hohe Flächenleistung ermöglichen. Gegenüber anderen Streusystemen zeichnen sie sich durch eine vergleichsweise einfache Handhabung und niedrige Unterhaltskosten aus. Die bekannten Zweischeibenstreuer lassen sich im Wesentlichen in zwei Systeme mit unterschiedlichen Streuprinzipien unterteilen (EP-B1-0 540 889). Bei dem ersten System laufen die beiden Streuscheiben derart gegensinnig um, dass sie in der Mitte entgegen der Fahrtrichtung drehen, während sie bei dem anderen System in der Mitte in Fahrtrichtung drehen.

Bei dem ersten System werden zwei im Wesentlichen nebeneinander liegende Streufächer erzeugt, die sich in der Mitte geringfügig überlappen und außen bis in den Bereich der Verbindungslinie der beiden Scheiben reichen. Es entsteht ein im Wesentlichen trapezförmiges Streubild mit flach abfallenden Flanken, das sein Plateau in der Mitte des Streuers hat. Bei dem zweiten System werden Streufächer erzeugt, die sich hinter dem Zweischeibenstreuer weitgehend vollständig überlappen und zu einem breiten dreieckförmigen Streubild führen. In beiden Fällen erfolgt im Fahrgassenbetrieb bei der Anschlussfahrt eine Überlappung nur im Bereich der Flanken der jeweils einander zugekehrten Streufächer. Der Vorteil des zweiten Systems besteht insbesondere darin, dass die Verteilgenauigkeit bei einem großen Streuwinkel der beiden Streufächer besser ist als bei dem ersten System.

Die vorgenannten Feststellungen gelten für das Normalstreuen, bei dem also dem zweiten System der Vorzug zu geben ist. Beim Grenz- oder Randstreuen, wie auch beim Streuen auf einer Teilbreite, bei Streuvorgängen also, bei denen die Streubreite auf nur einer Seite über Zwischenwerte bis zum Wert Null reduziert und - im Falle des Grenzstreuens bei halbem Fahrgassenabstand - ein anderes Streubild erzeugt werden muss, um die Nährstoffversorgung der Pflanzen bis zur Feldgrenze sicherzustellen, ist das zweite System wegen der fast vollständigen Überlappung der beiden Streufächer dem ersten System unterlegen. Dies gilt auch, wenn bei großen Arbeitsbreiten eine unterschiedliche Düngergabe rechts zu links gegeben werden soll, was nur bei einer geringen Überlappung der Streufächer möglich ist.

Bei Zweischeibenstreuern, die nach dem ersten Prinzip arbeiten, also zwei sich nur im mittleren Bereich überlappende Streufächer erzeugen, ist es bekannt (WO 96/32005) jeder Streuscheibe zwei Auslauföffnungen zuzuordnen, die im Wesentlichen spiegelsymmetrisch zu einem Radius der Streuscheibe im Behälterboden angeordnet sind und deren freier Querschnitt mittels Dosierschiebern gesteuert wird. Ferner ist den Dosieröffnungen ein Absperrschieber zugeordnet, mit dem unter Beibehaltung der Dosierstellung der Düngerstrom vollständig unterbrochen werden kann. Beim Normalstreuen werden je nach Streubreite und Streumenge die jeder Streuscheibe zugeordneten beiden Dosieröffnungen im gleichen Sinn gesteuert. Bei bestimmten Streugutarten kann dies zu einem ungleichmäßigen Streubild führen, was dadurch ausgeglichen wird, dass die beiden Dosieröffnungen für jede Streuscheibe unterschiedlich gesteuert werden. Zur Reduzierung der Streubreite auf nur einer Seite wird eine der Dosieröffnungen auf dieser Seite geschlossen und tritt der Dünger nur über die andere Dosieröffnung auf die Streuscheibe aus. Während für alle vorgenannten Streuarten die Dosieröffnungen von der Drehachse der Streuscheibe aus nach außen geöffnet werden, ist für das Grenzstreuen eine umgekehrte Öffnungsbewegung vorgesehen, so dass der Aufgabepunkt des Düngers auf der Streuscheibe weiter außen liegt. Alle Maßnahmen zur einseitigen Reduzierung der Streubreite bzw. zur einseitigen Änderung des Streubildes beschränken sich auf die beiden Dosieröffnungen nur der einen Streuscheibe auf dieser Seite.

Bei Zweischeibenstreuern mit in der Mitte in Fahrtrichtung drehenden Streuscheiben, bei denen sich die beiden Streufächer stets weitgehend überlappen, versagen die vorgenannten Maßnahmen. Stattdessen ist es bekannt (DE-C2-34 20 617), zur einseitigen Reduzierung der Streubreite den gesamten Streuer zu dieser Seite hin zu neigen. Dadurch wird aber das Streubild über die gesamte Streubreite erheblich verändert und die Verteilgenauigkeit schlechter. Auch ist ein einwandfreies Grenzstreuen mit entsprechend steilflankigem Streubild an der Feldgrenze nicht zu erreichen. Bei einem anderen bekannten Zweischeibenstreuer (EP-A1 0 876 747) sind jeder Streuscheibe gleichfalls zwei zu einem Radius der Streuscheibe spiegelsymmetrisch angeordnete Dosieröffnungen vorgesehen. Zur einseitigen Reduzierung der Streubreite sind auf dieser Seite Umlenkeinrichtungen angebaut, die mehrere Leitschirme aufweisen. Auf diese Weise wird der Streuwinkel des Streufächers von außen nach innen verkleinert. Zugleich werden die Dosieröffnungen der gegenüberliegenden Streuscheibe geschlossen, so dass diese faktisch funktionslos sind. Abgesehen von dem konstruktiven Aufwand und der Tatsache, dass eine Streubreitenreduzierung nur auf der einen Seite möglich ist, führt auch dies zu Ungenauigkeiten in der Düngerverteilung.

Es ist auch schon versucht worden (DE-A1-199 58 452), bei einem Streuer mit in der Mitte gegen die Fahrtrichtung drehenden Streuscheiben eine weitgehend vollständige Überlappung der Streufächer zu erzeugen. Dies setzt eine große Düngeraufgabefläche voraus, die durch mehrere Auslauföffnungen erreicht wird. Ferner sind die Wurfflügel verstellbar angeordnet und Streuscheiben mit unterschiedlichen Wurfflügeln austauschbar vorgesehen. Die Aufgabefläche wird durch Zu- bzw. Abschalten der Dosieröffnungen verändert.

Schließlich ist es bekannt (EP-A1-0 880 877, EP-A1- 0 835 602), einen großen Streuwinkel dadurch zu erreichen, dass die Streuscheiben im Zentrum eine von Wurfflügeln freie Ringfläche aufweisen, auf die der Dünger aufgegeben und durch Reibung in Drehrichtung mitgenommen wird. Er breitet sich im Zentrifugalfeld der Scheibe zugleich nach außen aus und wird schließlich vom inneren Ende der Wurfflügel erfasst und nach außen beschleunigt. Je nach Drehzahl und Streumenge bildet sich an der Ringfläche eine Schicht unterschiedlicher Dicke und Ausdehnung. Der Dünger wird mit einem großen Streuwinkel, der größer als 180° betragen kann, abgegeben. Bei diesem Streuer ist es ferner bekannt die Drehrichtung der Streuscheiben umzukehren, um dadurch die Überlappung der Streufächer und dadurch insbesondere die Streubreite zu beeinflussen. Zu diesem Zweck sind die auf den Streuscheiben angeordneten Wurfschaufeln auf der in Drehrichtung jeweils wirksamen Seite unterschiedlich gestaltet. Zum Drehrichtungswechsel muss die Zapfwelle des Traktors stillstehen und der Traktor angehalten werden. Ferner sind für das Grenzstreuen besondere Leitschirme vorgesehen. Auch diese Maßnahmen sind aufwändig und zwingen vor allem zu einem Stillstand des Traktors beim Umstellen von Normalstreuen auf eine andere Streuart, was für den Landwirt außerordentlich umständlich ist.

Der Erfindung liegt die Aufgabe zugrunde, bei dem zuvor beschriebenen Verteilverfahren, bei dem sich für das Normalstreuen die Streufächer der beiden Streuscheiben weitgehend überlappen, eine asymmetrische Änderung der Streubreite und/oder unterschiedliche Streugutgaben auf beiden Seiten ohne Stillstand des Traktors und ohne zusätzliche Anbauten zu ermöglichen und ohne die Verteilgenauigkeit nennenswert zu beeinträchtigen. Unter asymmetrischer Änderung der Streubreite wird im Sinne der Erfindung die wahlweise und nur zeitweilige Reduzierung der Überlappung während des Normalstreuens zur Anpassung an einen lokal wechselnden Streugutbedarf auf der Arbeitsbreite sowie jede einseitige Reduzierung der Streubreite für das Grenz-, oder Randstreuen oder das Halbseitenstreuen verstanden. Ferner liegt der Erfindung die Aufgabe zugrunde, einen Zentrifugalstreuer vorzuschlagen, der die vorstehend geforderte Arbeitsweise ermöglicht..

Bei einem Verfahren gemäß der den Oberbegriff des Anspruchs 1 bildenden EP-A1 0 880 877 wird diese Aufgabe erfindungsgemäß dadurch gelöst, dass die Ausbreitung des Streugutes auf der wurfflügelfreien Fläche der Streuscheibe auf einen Ringsektor mit einem auf den größten Streuwinkel abgestimmten Sektorwinkel begrenzt wird, und dass zur einseitigen Reduzierung der Überlappung der Streufächer der Streuwinkel wenigstens einer Streuscheibe durch Steuerung des Sektorwinkels, innerhalb dessen sich das Streugut ringförmig ausbreitet und von den Wurfflügeln erfasst wird, von innen nach außen verkleinert wird, und dass zugleich der Streuwinkel und/oder die Streubreite an der anderen Streuscheibe reduziert wird.

Bei dem erfindungsgemäßen Verfahren wird die Ausbreitung des Streugutes auf der wurfflügelfreien Fläche in Drehrichtung auf einen Sektorwinkel beschränkt und dadurch der maximale Streuwinkel, der wiederum für die Arbeitsbreite bestimmend ist, vorgegeben. Die Streufächer beider Streuscheiben lassen sich auf diese Weise mit ihrem größten Streuwinkel vollständig überlappen. Zur asymmetrischen Änderung der Streubreite wird das Ausmaß der Überlappung der Streufächer geändert, indem der Sektorwinkel der einen Streuscheibe verkleinert wird, so dass sich die Streufächer nicht mehr annähernd vollständig, sondern nur noch teilweise, gegebenenfalls auch nur noch geringfügig oder gar nicht überlappen. Dadurch entsteht eine Verteilung, wie sie ähnlich bei dem Verteilprinzip verwirklicht ist, bei dem sich die Streufächer auch beim Normalstreuen nur wenig überlappen. Die notwendigen Eingriffe beschränken sich auf eine entsprechende Steuerung des Sektorwinkels, ohne dass gesonderte Anbauten, eine Drehrichtungsumkehr der Streuscheiben oder dergleichen notwendig sind.

Durch die vorgenannten Maßnahmen ist es nicht nur möglich, die Streubreite auf nur einer Seite des Streuers etwa für das Grenz- oder Randstreuen zu reduzieren, sondern insbesondere auch beim Normalstreuen von Dünger auf der voreingestellten Arbeitsbreite die Düngergabe auf einen rechts und links variierenden Düngerbedarf des Bodens einzustellen und diese Einstellung während der Fahrt zu ändern.

Denselben Zweck dient insbesondere die weitere Maßnahme, wonach auch der Streuwinkel der anderen Streuscheibe durch Steuerung des Sektorwinkels von innen nach außen verkleinert wird.

Das erfindungsgemäße Verfahren lässt sich dann effektiv durchführen, wenn für das Normalstreuen das von dem Dosierorgan auf jede Streuscheibe aufgegebene Streugut mit einem Sektorwinkel im Bereich von 60° oder mehr an die Wurfflügel abgegeben und der Sektorwinkel zur Reduzierung der Überlappung verkleinert wird.

Die Reduzierung des Sektorwinkels erfolgt dann in einfacher Weise dadurch, dass das sich auf der wurfflügelfreien Fläche der Streuscheibe ausbreitende Streugut unmittelbar oberhalb der Streuscheibe wenigstens einseitig so geführt wird, dass der Sektorwinkel von einem größten Wert aus verkleinert werden kann.

Vorzugsweise wird das sich auf der wurfflügelfreien Fläche der Streuscheibe ausbreitende Streugut unmittelbar oberhalb der Streuscheibe beidseitig geführt, um ein Ausweichen des Streugutes gegen die Drehrichtung zu verhindern, wobei diese Führung ortsfest sein kann, eine Änderung des Sektorwinkels also nur einseitig erfolgt.

Der Aufgabewinkel im Bereich von 60° oder mehr lässt sich auch dadurch verwirklichen, dass das Streugut auf jede Streuscheibe von einem Dosierorgan mit zwei nebeneinanderliegende Dosieröffnungen aufgegeben wird.

In einer weiteren Ausführung kann zur Reduzierung des Streuwinkels beider Streuscheiben der Sektorwinkel an den Streuscheiben in einander entgegengesetzter Richtung verkleinert werden.

Bei Zentrifugalstreuern, deren Streuscheiben auf den einander zugekehrten Seiten in Fahrtrichtung umlaufen und deren Streufächer sich weitgehend überlappen, wird der Sektorwinkel auf der Seite mit dem reduzierten Streuwinkel entgegen der Drehrichtung verkleinert. Auf diese Weise werden bei Reduzierung der Streubreite auf der einen Seite und Aufrechterhaltung der Streubreite auf der anderen Seite die Streufächer in der Mitte nicht oder nur noch wenig überlappt.

Beim nur halbseitigen Streuen wird der Sektorwinkel der auf dieser Seite angeordneten Streuscheibe praktisch auf Null reduziert, d.h. es wird (werden) die Dosieröffnung(en) dieser Streuscheibe geschlossen. Zugleich wird der Streuwinkel der anderen Streuscheibe durch Verkleinerung des Sektorwinkels reduziert.

Das Verfahren lässt sich auch bei Zentrifugalstreuern anwenden, deren Streuscheiben auf den einander zugekehrten Seiten entgegen der Fahrtrichtung umlaufen. Um bei solchen Streuern eine annähernd vollständige Überlappung der beiden Streufächer zu erreichen, muss vermieden werden, dass die von einer Streuscheibe abgeworfenen Streugutpartikel auf die andere Streuscheibe auftreffen. Dies erfordert also einen entsprechend großen Abstand der Streuscheiben voneinander.

Bei einem solchen Streuer wird das erfindungsgemäße Verfahren zur einseitigen Reduzierung der Streubreite dadurch verwirklicht, dass der durch die Dosierorgane vorgegebene Aufgabepunkt des Streugutes auf die Streuscheibe in Drehrichtung verlagert und der Sektorwinkel auf der Seite des reduzierten Streuwinkels gegen die Drehrichtung verkleinert wird. In diesem Fall sind also zwei Maßnahmen zu ergreifen.

Beim halbseitigen Streuen wird, wie oben beschrieben, verfahren.

Ferner kann bei beiden Streuertypen zur Lageveränderung des Streuwinkels der Sektorwinkel des Streuguts verlagert und dadurch wiederum die Überlappung der Streufächer variiert werden.

Bei einem Zweischeibenstreuer mit innenseitig in Fahrtrichtung drehenden Streuscheiben kann zur einseitigen Reduzierung der Streubreite, insbesondere zum Grenzstreuen, die Drehzahl der grenznahen Streuscheibe reduziert und der Sektorwinkel an der grenznahen Streuscheibe und damit der Aufgabepunkt gegen die Drehrichtung verlagert werden, indem das Dosierorgan gegen die Drehrichtung verlagert wird. Zugleich wird der Streuwinkel der grenzfernen Streuscheibe von innen nach außen reduziert.

Bei einem Zweischeibenstreuer mit innenseitig gegen die Fahrtrichtung drehenden Streuscheiben kann gleichfalls die Drehzahl der grenznahen Streuscheibe reduziert werden. Auch in diesem Fall wird zugleich auf der grenzfernen Streuscheibe der Streuwinkel von innen nach außen reduziert. Es kann auch hier das Dosierorgan der grenznahen Streuscheibe und damit der Aufgabepunkt entgegen der Drehrichtung verlagert werden.

Weitere, wenn auch nicht zwingende Maßnahmen bestehen darin, dass zur einseitigen Reduzierung der Streubreite der Streufächer dieser Streuscheibe durch Leiteinrichtungen von außen nach innen eingeengt wird. Zugleich kann der Sektorwinkel reduziert werden.

Die Erfindung betrifft ferner einen Zentrifugalstreuer mit den Merkmalen des Oberbegriffs des Anspruchs 19 (EP-A1-0 880 877). Ein solcher Zentrifugalstreuer zeichnet sich erfindungsgemäß dadurch aus, dass unmittelbar oberhalb der Streuscheibe eine Führungseinrichtung angeordnet ist, mittels der die Ausbreitung des Streugutes auf der Ringfläche auf einen Ringsektor mit einem Sektorwinkel von mindestens 60° bezüglich der Achse der Streuscheibe begrenzbar ist, und dass zur Reduzierung der Überlappung der Streufächer der Sektorwinkel reduzierbar ist.

Das auf die wurfflügelfreie Ringfläche der Streuscheibe aufgegebene Streugut wird von der Streuscheibe durch Reibungskräfte in Drehrichtung mitgenommen und zugleich nach außen getragen, wo es vom inneren Ende der Wurfflügel "abgeschält" und nach außen zur Abwurfkante der Wurfflügel beschleunigt wird. Die Ausbreitung des Streugutes in Drehrichtung wird durch die unmittelbar oberhalb der Streuscheibe angeordnete Führungseinrichtung auf eine Teilringfläche begrenzt, innerhalb der das Streugut von den Wurfflügeln aufgenommen wird. Bei einer durch die Stellung des Dosierorgans vorgegebenen Streumenge und einer gegebenen Drehzahl stellt sich auf der Ringfläche nach wenigen Umdrehungen ein stabiler Zustand ein, wobei sich das Streugut in einer mehr oder weniger starken Schicht aufbaut und an der Peripherie der Ringfläche von den Wurfflügeln aufgenommen wird. Der durch die Führungseinrichtung vorgegebene Sektorwinkel muss mindestens 60° betragen, um - unabhängig von der Drehrichtung der Streuscheiben - beim Normalstreuen eine weitgehend vollständige Überlappung der Streufächer zu erreichen und aus dieser Position heraus durch Reduzierung des Sektorwinkels eine Reduzierung der Überlappung der Streufächer derart zu ermöglichen, dass neben dem Normalstreuen verschiedene weitere Streuarten wie Grenzstreuen, Randstreuen, lokal veränderbare Streugutgaben etc., verwirklichen zu können.

In bevorzugter Ausführung weist die Führungseinrichtung wenigstens ein'gegenüber dem Dosierorgan in Drehrichtung der Streuscheibe versetzt angeordnetes Führungsorgan auf, das den Sektorwinkel auf einen größten Wert begrenzt und zur Reduzierung des Sektorwinkels gegen die Drehrichtung, also in Richtung auf das Dosierorgan verstellbar ist.

Um ein Ausbreiten des Streugutes unterhalb des Dosierorgans entgegen der Drehrichtung zu verhindern, was insbesondere bei größerer Streumenge und zu langsamen Abfluss in Drehrichtung, aber auch durch Reflexionen geschehen kann, weist die Führungseinrichtung ferner in Drehrichtung unmittelbar vor dem Dosierorgan ein den Sektorwinkel fest begrenzendes Leitorgan auf, das den aus dem Dosierorgan austretenden Streugutstrom an der in Drehrichtung hinteren Seite unmittelbar auf die Streuscheibe leitet.

Ferner weist die Führungseinrichtung eine die Ausbreitung des Streugutes zwischen dem Dosierorgan und der Drehachse der Streuscheibe begrenzendes Leitelement auf, das vorteilhafterweise konzentrisch zur Drehachse der Streuscheibe ausgebildet ist, so dass zwischen der Führungseinrichtung und der Umlaufbahn der inneren Enden der Wurfflügel eine geometrisch exakte Ringfläche begrenzt wird, innerhalb der sich das Streugut je nach Streumenge, Drehzahl und Sektorwinkel in einer mehr oder minder starken Schicht aufbaut und kontrolliert von den Wurfflügeln "abgeschält" wird.

Vorteilhafterweise sind das Führungsorgan und das konzentrische Leitorgan miteinander verbunden, vorzugsweise einteilig ausgebildet, und ist das konzentrische Leitorgan zumindest auf dem Verstellweg des Führungsorgans an dem festen Leitelement dichtend geführt, um das Streugut innerhalb der Ringfläche zu halten.

Schließlich erstrecken sich das Führungsorgan, das Leitorgan und das Leitelement im Wesentlichen zwischen der Streuscheibe und dem tiefsten Punkt des Streugut-Behälters, so dass der gesamte Streugutstrom, insbesondere auch reflektierende Partikel, innerhalb der Führungseinrichtung gehalten wird.

Eine bevorzugte Ausführung zeichnet sich dadurch aus, dass der Streugut-Behälter einen um die Achse der Streuscheibe drehbaren Boden aufweist, der aus einer Bodenplatte mit einer Auslauföffnung, einer darunter angeordneten, als Dosierschieber wirkenden Zwischenplatte mit einer mit der Auslauföffnung korrespondierenden Durchlauföffnung und einer darunter angeordneten Führungsplatte, in der zumindest das Führungsorgan und das konzentrische Leitelement der Führungseinrichtung festgelegt sind und die eine mit der Durchlauföffnung und der Zwischenplatte korrespondierende, über den gesamten Verstellbereich des Führungsorgans reichenden Ausschnitt aufweist.

Durch diese Ausbildung ist eine kompakte und niedrige Baueinheit geschaffen, in der alle Funktionen für die Einstellung des Streuers vereint sind.

So können die Bodenplatte, die Zwischenplatte und die Führungsplatte gemeinsam verdrehbar sein, um beispielsweise den Aufgabepunkt des Streugutes zu verlagern. Bei dieser Zwangskopplung der drei Platten bleiben während der Verstellung des Aufgabepunktes alle anderen Einstellungen erhalten, also beispielsweise die Einstellung des Dosierorgans und damit der Streumenge und die Einstellung der Führungseinrichtung und damit des Sektorwinkels bzw. des Streuwinkels des Streufächers. Es wird lediglich der Sektorwinkel selbst und damit der Streufächer verlagert.

Ferner können die Zwischenplatte und die Führungsplatte gegenüber der Bodenplatte gemeinsam verdrehbar sein, wobei sich die Überdeckung der Auslauföffnung in der Bodenplatte und der Durchlauföffnung in der Zwischenplatte, also die Einstellung des Dosierorgans und damit der Streumenge ändert, während der Aufgabepunkt und der Streuwinkel unverändert bleiben.

Schließlich können die Führungsplatte und die Zwischenplatte relativ zueinander verdrehbar sein, um bei vorgegebener Einstellung des Dosierorgans, also einer bestimmten Streumenge durch Verdrehen der Führungsplatte nur den Sektorwinkel und damit den Streuwinkel zu ändern.

Zweckmäßigerweise besitzt das Führungsorgan der Führungseinrichtung einen gegenüber einer Radialen der Streuscheibe in Drehrichtung geneigten Anstellwinkel, wodurch der Sektorwinkel in Drehrichtung aufgeweitet wird. Durch diese Maßnahme wird insbesondere der Abfluss des Streugutes in die Wurfflügel verbessert und auch bei großer Streumenge ein Aufstauen des Streugutes an dem Führungsorgan vermieden.

Um für die verschiedenen Betriebsarten des Streuers eine automatisierte Einstellung zu ermöglichen, sind das Dosierorgan für eine Streuscheibe und das Führungsorgan für die andere Streuscheibe steuerungstechnisch jeweils derart verknüpft, dass beim Schließen des Dosierorgans das Führungsorgan für die andere Streuscheibe auf einen kleineren Sektorwinkel eingestellt ist. Damit ist insbesondere ein halbseitiges Streuen oder auch ein Grenz- oder Randstreuen möglich, indem das Dosierorgan an der einen Streuerseite geschlossen und zugleich der Streufächer der anderen Streuscheibe von innen nach außen durch Verkleinerung des Sektorwinkels reduziert wird, so dass die Streuscheibe das Streugut nicht auf die nicht zu bestreuende Fläche bzw. nur bis zur Feldgrenze abwirft. Die gleiche Verknüpfung kann während der Streuarbeiten nur zeitweilig vorgesehen sein, um die Streugutgabe wahlweise auf der einen oder anderen Streuerseite an den Streugutbedarf an dieser Seite anzupassen.

Ferner ist von Vorteil, wenn die Einrichtung zur Reduzierung der Streubreite und das Führungsorgan steuerungstechnisch jeweils derart verknüpft sind, dass bei einer Reduzierung der Streubreite auf einer Seite das Führungsorgan auf der anderen Seite auf einen kleineren Sektorwinkel eingestellt wird, um auf diese Weise die Überlappung der Streufächer zu ändern.

Um eine Fernbedienung der Einstellung des Streuers zu ermöglichen, sind dem Dosierorgan und dem Führungsorgan Stellglieder in Form hydraulischer und/oder elektrischer Aktoren zugeordnet, die steuerungstechnisch miteinander verknüpft sind und eine Regelung in Abhängigkeit von vorgegebenen Einstellungen ermöglichen. Dadurch kann bei Änderung des Sektorwinkels und damit des Streuwinkels zugleich die Streumenge nachgeführt werden.

Statt eines Aktors kann dem Führungsorgan als Stellglied auch ein einfach wirkender Hydraulikzylinder mit Rückholfeder zugeordnet sein, die das Führungsorgan in die Position mit größtem Streuwinkel drängt, während durch Beaufschlagen des Hydraulikzylinders die Reduzierung des Sektorwinkels und damit des Streuwinkels vorgenommen wird.

Ebenso kann dem Dosierorgan als Stellglied ein einfach wirkender Hydraulikzylinder mit Rückholfeder zugeordnet sein, wobei die Rückholfeder das Dosierorgan in der Öffnungsstellung hält und der Hydraulikzylinder für die Einstellung des Dosierorgans auf die gewünschte Streumenge dient.

Schließlich können die Stellglieder für das Dosierorgan und das Führungsorgan über eine Programmsteuerung miteinander verknüpft sein. Gleiches kann für das Stellglied des Dosierorgans und einem Stellglied für die Verlagerung des Aufgabepunktes vorgesehen sein. Damit kann der Streuer vor Inbetriebnahme auf die konkrete Streuaufgabe oder auf Teilaufgaben durch Eingabe der notwendigen Parameter fernbedient und automatisch betrieben werden.

Weist der Streuer die Möglichkeit einer Drehzahländerung auf, sind im Sinne eines automatisierten Betriebs das Stellglied für das Führungsorgan mit einem Stellglied für die Drehzahl der Streuscheibe über eine Programmsteuerung regelbar verknüpft.

Damit ist es insbesondere für das Grenz- oder Randstreuen möglich, die Drehzahl der grenznahen Streuscheibe und zugleich den Sektorwinkel an der grenzfernen Streuscheibe zu reduzieren. Stattdessen oder zusätzlich kann der Aufgabepunkt auf der grenznahen Streuscheibe entgegen der Drehrichturig verlagerbar sein.

Vorzugsweise sind die Wurfflügel der Streuscheiben in Länge und Lage spiegelbildlich gleich angeordnet. Dabei können die Wurfflügel der Streuscheiben paarweise gleich sein.

In weiterhin vorteilhafter Ausgestaltung sind die Wurfflügel jeder Streuscheibe unterschiedlich lang. Dies dient der Vergleichmäßigung der Streugutverteilung innerhalb des Streufächers einer Streuscheibe. Ist ferner der kürzere Wurfflügel entgegen der Drehrichtung zurückgestellt, lässt sich der Streuwinkel vergrößern. Um die damit verbundene geringere Abfluggeschwindigkeit und damit die geringere Wurfweite des kürzeren Wurfflügels auszugleichen, kann dieser zumindest im Bereich seines äußeren Endes einen steileren Abwurfwinkel als der längere Wurfflügel aufweisen.

Um eine einwandfreie Funktion der Führungseinrichtung zu ermöglichen, sind die Streuscheiben vorzugsweise eben ausgebildet. Um dennoch eine die Wurfweite erhöhende Ballistik zu erzielen, weist wenigstens ein Wurfflügel jeder Streuscheibe zwei Führungsflächen für das Streugut auf, von denen eine etwa senkrecht zur Ebene der Streuscheibe und die andere untere Führungsfläche einen Abschnitt aufweist, der unter einem Winkel zwischen 40 bis 60° zur Ebene der Streuscheibe angeordnet ist und sich von innen nach außen verbreitert.

Das am inneren Ende und auf der Scheibenebene aufgenommene Streugut bleibt aufgrund der Trägheitskraft gegenüber dem umlaufenden Wurfflügel zurück und wird durch die untere abgewinkelte und sich nach außen verbreiternde Führungsfläche angehoben und unter einem Winkel gegenüber der Scheibenebene am äußeren Ende des Wurfflügels abgeworfen.

Schließlich können für verschiedene Arbeitsbreiten verschiedene Wurfflügel vorgesehen sein, die vorzugsweise mit Schnellverschlüssen an der Streuscheibe auswechselbar festgelegt sind. Stattdessen können auch auswechselbare Streuscheibensätze mit unterschiedlichen Wurfflügeln vorgesehen sein.

Bei Zweischeibenstreuern ist es zweckmäßig, jeder Streuscheibe je ein Rührwerk zuzuordnen, die jeweils von einem im Behälter angeordneten Hydromotor angetrieben sind, wobei ferner die Hydromotoren unabhängig voneinander steuerbar sind, um die Drehzahl der jeweiligen Einstellung der Dosierschieber anzupassen und den Dünger im Streugut-Behälter schonend im Fluss zu halten.

Bei Zweischeibenstreuern, deren Streuscheiben an den einander zugekehrten Seiten entgegen der Fahrtrichtung umlaufen, setzt eine weitgehend vollständige Überlappung der Streufächer einen entsprechenden Abstand der Streuscheiben voraus. Er sollte wenigstens 10cm größer als der äußere Flugkreisdurchmesser der Streuscheiben sein. Im Übrigen hängt dieser Minimalabstand.von der Arbeitsbreite des jeweiligen Streuers ab, so kann er durchaus auch 50 bis 80cm größer als der äußere Flugkreisdurchmesser der Streuscheiben sein. Eine größtmögliche Arbeitsbreite mit weitgehend vollständiger Überlappung der Streufächer lässt sich erreichen, wenn der Abstand der Drehachsen wenigstens doppelt so groß ist wie der äußere Flugkreisdurchmesser der Streuscheiben.

Nachstehend ist die Erfindung anhand von in der Zeichnung gezeigten Ausführungsbeispielen beschrieben. In der Zeichnung zeigen:
- Fig.1: eine schematische Ansicht eines Zweischeiben-Zentrifugalstreuers;
- Fig.2: eine Draufsicht auf die zwei Streuscheiben eines Streuers gemäß Fig.1 in einer fiktiven Betriebsphase;
- Fig.3: eine Draufsicht auf die eine Streuschreibe in einer weiteren fiktiven Betriebsphase;
- Fig.4: eine der Fig.2 entsprechende Draufsicht auf die beiden Streuscheiben mit einer Führungseinrichtung für das Streugut;
- Fig.5: eine vergrößerte Draufsicht auf die linke Streuscheibe gemäß Fig.4 mit einer abgewandelten Ausführung der Führungseinrichtung;
- Fig.6: das Streubild eines Zweischeibenstreuers mit sich weitgehend überlappenden Streufächern beim Normalstreuen (Drehrichtung der Streuscheiben entgegen der Fahrtrichtung);
- Fig.6a: die Streugutverteilung bei einer Arbeitsweise gemäß Fig.6;
- Fig.7: das Streubild bei einseitiger Reduzierung der Überlappung;
- Fig.8: das Streubild bei beidseitiger Reduzierung der Überlappung;
- Fig.8a: die Streugutverteilung bei einer Arbeitsweise gemäß Fig.8;
- Fig.9: das Streubild beim halbseitigen Streuen;
- Fig.9a: die Streugutverteilung bei einer Arbeitsweise gemäß Fig.9;
- Fig.10: das Streubild beim Grenzstreuen;
- Fig.10a: die Streugutverteilung bei einer Arbeitsweise gemäß Fig.10;
- Fig.10b: das Streubild beim Grenzstreuen mit gleichzeitiger Reduzierung des Streuwinkels auf der Grenzseite;
- Fig.11: ein der Fig.6 entsprechendes Streubild bei anderer Relation zwischen Fahrtrichtung und Drehsinn der Streuscheiben;
- Fig.11a: die Streugutverteilung bei einer Arbeitsweise gemäß Fig.11;
- Fig.12: das Streubild bei einseitiger Reduzierung der Überlappung;
- Fig.13: das Streubild bei beidseitiger Reduzierung der Überlappung;
- Fig.13a: die Streugutverteilung bei einer Arbeitsweise gemäß Fig.13;
- Fig.14: das Streubild beim halbseitigen Streuen;
- Fig.14a: die Streugutverteilung bei einer Arbeitsweise gemäß Fig.14;
- Fig.15: das Streubild beim Grenzstreuen;
- Fig.15a: die Streugutverteilung beim Grenzstreuen;
- Fig.16: das Streubild beim Grenzstreuen mit gleichzeitiger Reduzierung des Streuwinkels auf der Grenzseite;
- Fig.16a: die Streugutverteilung bei einer Arbeitsweise gemäß Fig.16;
- Fig.17: eine schematische Explosionsdarstellung von Bodenplatte, Zwischenplatte und Führungsplatte;
- Fig.17a: einen Schnitt XVII - XVII gemäß Fig.17;
- Fig.18: eine Draufsicht auf die Zwischenplatte in einer Dosierstellung;
- Fig.19: eine schematische Seitenansicht einer ebenen Streuscheibe;
- Fig.20: eine Ansicht auf die Innenseite eines Wurfflügels in einer weiteren Ausführungsform;
- Fig.21: einen Schnitt XXI - XXI gemäß Fig.20;
- Fig.22: eine perspektivische Ansicht des Wurfflügels gemäß Fig.20 und
- Fig.23: ein Antriebsschema für die Dosierung und die Verstallung des Streuwinkels.

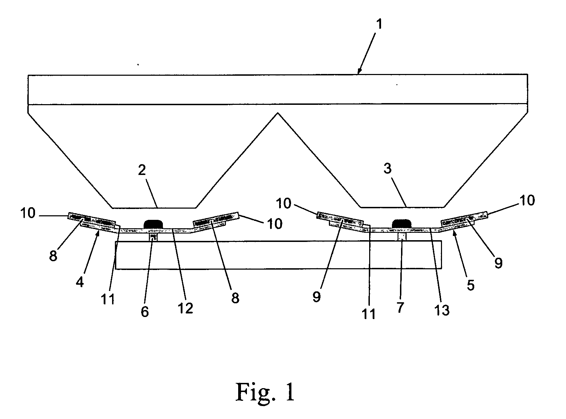

Der in Fig.1 schematisch wiedergegebene Streuer, insbesondere Düngerstreuer, ist als Anbaugerät oder als Nachläufer für einen Traktor ausgebildet. Er weist in herkömmlicher Weise einen Streugutbehälter 1, der sich trichterförmig zu je einem Boden 2, 3 verjüngt, und zwei darunter angeordnete Streuscheiben 4, 5 auf, die jeweils auf einer angetriebenen Achse 6, 7 sitzen. Die Achsen 6, 7 werden von der Zapfwelle des Traktors über ein Getriebe oder autonom, z.B. hydraulisch, mit vorzugsweise variabler Drehzahl angetrieben. Der Behälter 1 weist im Bereich des Bodens 2, 3 nicht gezeigte Auslauföffnungen und herkömmliche Dosierorgane, z.B. Dosierschieber, zur Veränderung der den Streuscheiben 4, 5 zugeführten Streumenge auf. Die Streuscheiben 4, 5 sind mit Wurfflügeln 8, 9, vorzugsweise jeweils zwei, versehen, die das auf die Streuscheibe aufgegebene Streugut mitnehmen und an ihrem äußeren Ende 10 zentrifugal abschleudern.

Im Gegensatz zu den in der Praxis meist verbreiteten Streuern, bei denen das Streugut unmittelbar in die Wurfflügel aufgegeben wird, weisen die Streuscheiben 4, 5 eine wurfflügelfreie Ringfläche 12, 13 auf, d.h. das innere Ende 11 jedes Wurfflügels 8, 9 ist mit merklichem Abstand von der Achse 6, 7 bzw. von der in Fig.1 angedeuteten Nabe angeordnet, was an sich gleichfalls bekannt ist (EP-A1-0880 877).

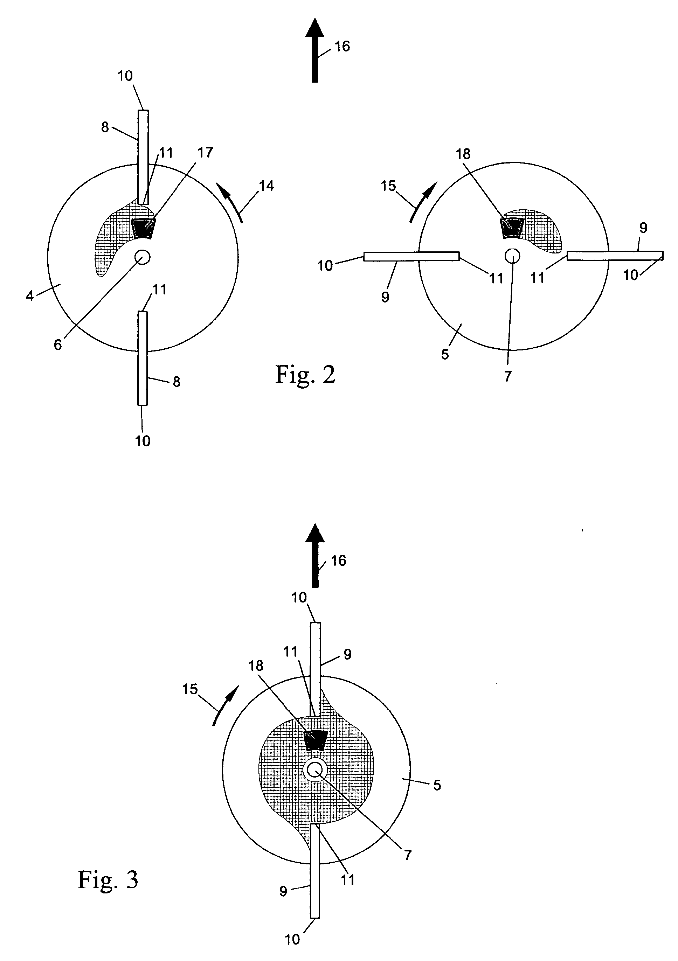

Fig.2 zeigt eine schematische Draufsicht auf die beiden Streuscheiben 4, 5 als "Momentaufnahme" einer Betriebsphase. Die Drehrichtung der Streuscheiben ist mit 14, 15 und die Fahrtrichtung des Streuers mit 16 angegeben. Die Streuscheiben 4, 5 drehen also in der Mitte in Fahrtrichtung 16. Das Streugut wird mittels des nicht gezeigten Dosierorgans auf einer Fläche 17 bzw. 18 - die sogenannte Aufgabefläche - auf die Streuscheiben aufgegeben. Die Aufgabefläche 17, 18 ist etwa eine Projektion der Dosieröffnung. Der Flächenschwerpunkt der Aufgabefläche definiert den Aufgabepunkt des Streugutes auf der Streuscheibe. Die Lage des Aufgabepunktes wird durch die Lage der Aufgabefläche und deren Geometrie bestimmt. Ferner kann der Aufgabepunkt durch Verlagerung des gesamten Dosierorgans verlegt werden.

Das auf die wurfflügelfreie Ringfläche der Streuscheiben 4, 5 treffende Streugut wird im Wesentlichen durch Reibungskräfte von der Streuscheibe mitgenommen und in Drehrichtung und gleichzeitig nach außen beschleunigt, bis es vom inneren Ende 11 des Wurfflügels erfasst und stärker beschleunigt wird. Der Wurfflügel "verzieht" also das Streugut zu einer Art "Schleppe". Nach wenigen Umläufen mit der bei Streuern üblichen Drehzahl baut sich das Streugut in dem wurfflügelfreien Bereich der Streuscheibe zu einer Schicht auf, deren Dicke bei gegebener Drehzahl von der aufgegebenen Streugutmenge abhängt. Dies ist für die in Fig.2 rechts gezeigte Streuscheibe 5 in Fig.3 schematisch angedeutet. Die Wurfflügel 9 "schälen" mit ihrem inneren Ende 11 das Streugut von dieser Schicht ständig ab und beschleunigen das "abgeschälte" Streugut nach außen zum freien äußeren Ende 10. Diese Vorgänge werden noch von einem Gebläseeffekt, den die mit den Wurfflügeln besetzten Streuscheiben erzeugen und der sich in einem Lufttransport von innen nach außen äußert und einer gewissen Sogwirkung unmittelbar hinter dem Wurfflügel überlagert. Bei dieser Anordnung würde das Streugut auf einer Kreisfläche auf dem Boden verteilt werden.

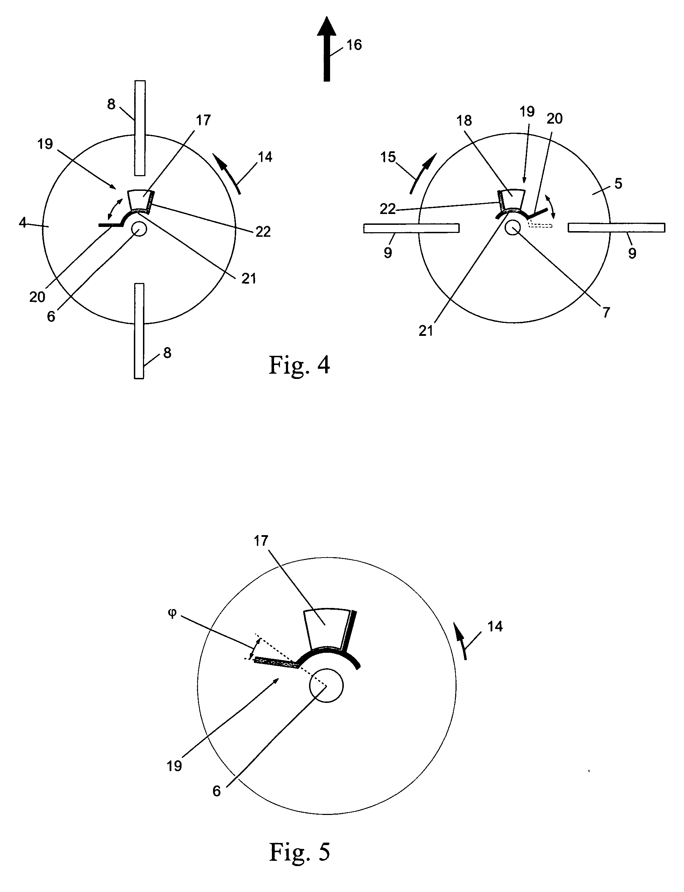

Um die Verteilung des Streugutes in Form eines Streufächers hinter dem fahrenden Streuer zu erreichen, wird die Ausbreitung des Streugutes auf der Streuscheibe auf einen Ringsektor begrenzt. Dies geschieht erfindungsgemäß mittels einer Führungseinrichtung 19, die in Fig.4 schematisch gezeigt ist. Die Führungseinrichtung 19 für das Streugut ist am Boden 2, 3 des Streugutbehälters angeordnet und reicht bis unmittelbar oberhalb der Streuscheiben 4, 5. Sie besteht aus einem gegenüber der Aufgabefläche 17 (Dosieröffnung) in Drehrichtung 14, 15 der Streuscheibe versetzt angeordneten Führungsorgan 20 in Form einer sich im Wesentlichen radial erstreckenden Führungswand, die mit einem Leitelement 21 fest verbunden ist. Das Führungsorgan 20 begrenzt die Ausbreitung des Streugutes auf der Streugutscheibe in Drehrichtung, während das Leitelement 21 das Ausweichen des Streugutes nach innen in Richtung auf die Achse 7, 8 der Streuscheibe 4, 5 verhindert. Das Leitelement 21 ist in Form einer konzentrisch zur Achse 6, 7 verlaufenden Wand ausgebildet. Das Führungsorgan 20 und das Leitelement 21 sind miteinander verbunden. Zur Führungseinrichtung gehört ferner ein ortsfest angeordnetes Leitorgan 22, das die Ausbreitung des Streugutes entgegen der Drehrichtung 14, 15 verhindert, was insbesondere bei großer Streumenge und zu langsamem Abfluss des Streugutes in Drehrichtung (niedrige Drehzahl) der Fall wäre. Das mit dem Leitelement 21 einteilige Führungsorgan 20 der Führungseinrichtung ist gegenüber dem ortsfesten Leitorgan 22 um die Achse 7, 8 verdrehbar, wie in Fig.4 mit Doppelpfeil angedeutet. Das Führungsorgan 20 und das Leitorgan 22 begrenzen den Ringsektor auf einen Winkel von wenigstens 60°, vorzugsweise bis auf 90°, wie in Fig.4 an der linken Streuscheibe erkennbar. Durch Verdrehen von Führungsorgan 20 und Leitelement 21 in Richtung auf das ortsfeste Leitorgan 22 lässt sich der Ringsektor verkleinern, wie an der linken Streuscheibe 4 in Fig.4 angedeutet ist. Eine Verkleinerung des Ringsektors ist - unabhängig vom Drehsinn der Streuscheiben relativ zur Fahrtrichtung - stets nur entgegen der Drehrichtung der Streuscheibe vorzunehmen.

Der durch das Führungsorgan 20 und das Leitorgan 22 vorgegebene und einstellbare Ringsektor bestimmen einen Sektorwinkel, der seinerseits den Streuwinkel vorgibt. Er lässt sich noch dadurch vergrößern, dass das Führungsorgan nicht entlang einer Radialen, sondern unter einem Winkel von größer als 90° zu dem Leitelement 21 angestellt ist, wie dies in Fig.5 mit dem zusätzlichen Winkel angedeutet ist.

In der nachfolgenden Beschreibung der Streubilder ist der mit Streugut belegte Ringsektor auf den Streuscheiben 4, 5 jeweils mit 25 auf der linken Streuscheibe 4 und mit 26 auf der rechten Streuscheibe 5 bezeichnet.

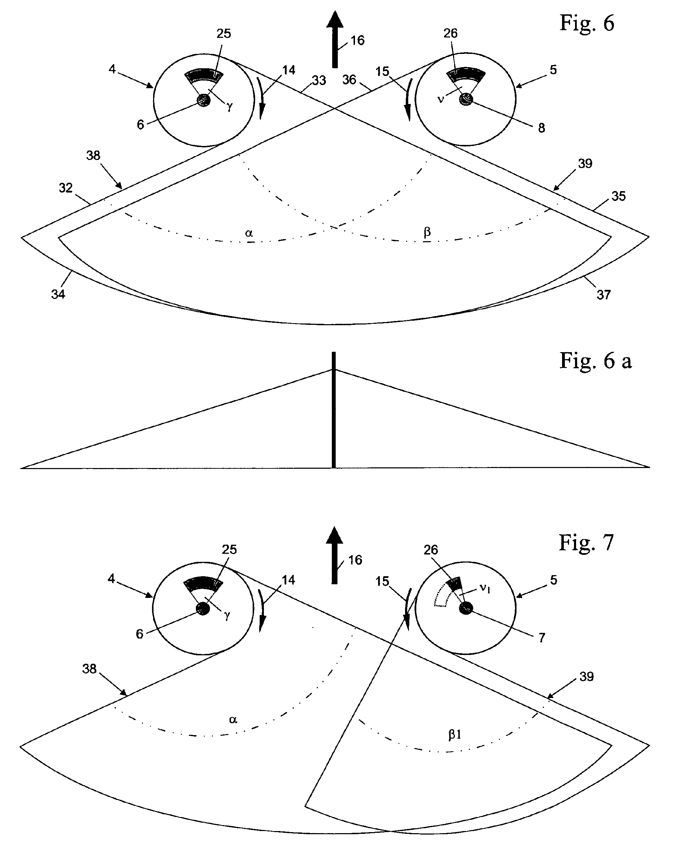

In den Streubildern gemäß Fig.6 bis 16 sind die beiden Streuscheiben 4, 5 eines Zweischeibenstreuers ohne die Wurfflügel dargestellt. Der über die nicht gezeigte Dosieröffnung auf die Streuscheibe 4 aufgegebene Dünger wird zentrifugal beschleunigt und in Form eines Streufächers 38 abgegeben, der idealerweise durch die tangentialen Linien 32, 33 und eine bogenförmige Linie 34 begrenzt ist. In gleicher Weise erzeugt die Streuscheibe 5 einen Streufächer 39 mit den zur Scheibe im Wesentlichen tangentialen Begrenzungslinien 35, 36 und der bogenförmigen Begrenzungslinie 37. Die Form der Streufächer wird von dem durch den Sektorwinkel der Streugutbelegung bestimmten Streuwinkel α bzw. β definiert, unter welchem der Dünger die Streuscheiben 4 bzw. 5 verlässt. Die Lage der Streufächer auf dem Boden wird wiederum durch die absolute Größe des Streuwinkels und durch dessen Drehlage bezüglich der Streuscheibe bestimmt. Weitere Abhängigkeiten ergeben sich von der Drehzahl der Streuscheiben und der konstruktiven Ausbildung und Anordnung der Wurfflügel auf der Streuscheibe.

Bei dem in Fig.6 gezeigten Normalstreuen mit entgegen der Fahrtrichtung 16 drehenden Streuscheiben 4, 5 überlappen sich die Streufächer 38, 39 der beiden Streuscheiben 4, 5 weitestgehend. Durch diese Überlappung wird eine dreieckförmige Streugutverteilung gemäß Fig.6a erzielt. Die Gesamtstreubreite hängt von den oben genannten Einflussfaktoren ab, während die Streumenge (Höhe des Dreiecks) über die Dosieröffnungen gesteuert wird. Beim Anschlussfahren werden die Streufächer derart überlappt, dass aus der dreieckförmigen Streugutverteilung eine lineare Verteilung wird.

Fig.7 zeigt ein Streubild mit asymmetrischer Überlappung der Streufächer, um beispielsweise asymmetrische Düngergaben auf der Streubreite entsprechend dem lokalen Düngerbedarf des Bodens zu verwirklichen. Der von der Streuscheibe 4 erzeugte Streufächer 38 entspricht demjenigen beim Normalstreuen gemäß Fig.6. Der Dünger wird mit dem Sektorwinkel γ aufgegeben, so dass das Streugut mit einem Streuwinkel α von der Streuscheibe 4 abgegeben wird. Der Streuwinkel β₁ des Streufächers 39 der Streuscheibe 25 ist demgegenüber von innen nach außen reduziert, so dass eine Überlappung etwa nur auf der einen Hälfte der Streubreite erfolgt und dort eine größere Düngermenge abgelegt wird. Diese reduzierte Überlappung wird durch eine Reduzierung des Aufgabe- bzw. Sektorwinkels auf den Betrag ϑ₁ erreicht. Dies wiederum gelingt bei dem wiedergegebenen Drehsinn 14, 15 der Streuscheiben dadurch, dass die Ausbreitung des Düngers unterhalb der Dosieröffnung durch das Führungsorgan gegen die Drehrichtung auf einen entsprechend kleineren Ringsektor der Streuscheibe 5 eingeengt wird. Zugleich wird der Aufgabepunkt (Flächenschwerpunkt) in Drehrichtung verlagert, indem beispielsweise die Dosieröffnung entsprechend verlagert wird, um sicherzustellen, dass der Streuwinkel von innen nach außen verkleinert wird. Diese Aufgabepunktverlagerung ist in Fig.7 mit gestrichelten Linien angedeutet. Der Düngermassenstrom und damit die Streumenge im Streufächer 39 wird durch die Dosieröffnung und die Einstellung des zugehörigen Dosierschiebers bestimmt. Es lässt sich also bei veränderter Überlappung jede gewünschte Streumenge auf diese Weise einstellen.

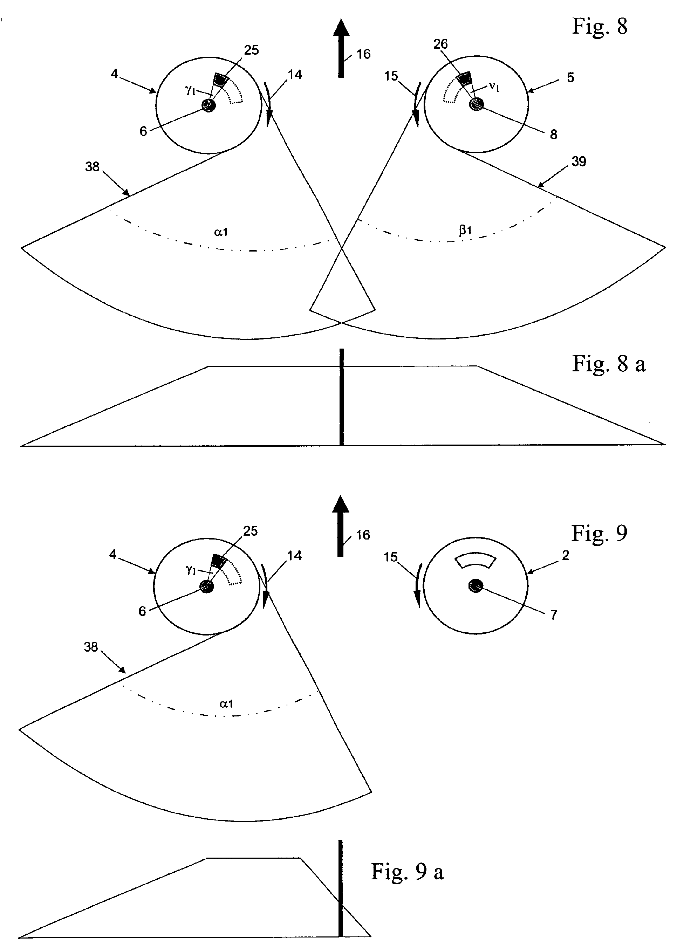

Bei der Arbeitsweise gemäß Fig.8 ist die Überlappung der beiden Streufächer weiter reduziert worden, indem auch der Streuwinkel des Streufächers 38 der linken Streuscheibe 1 von innen nach außen auf α₁ reduziert wird. Dies gelingt durch die Reduzierung des Sektorwinkels an dieser Streuscheibe auf den Betrag γ₁, indem die Ausbreitung des Düngers durch das Führungsorgan auf diesen Ringsektor begrenzt wird. Zugleich wird auch hier der Aufgabepunkt in Drehrichtung verlagert. Die Streufächer überlappen sich nur im Bereich zwischen den Streuscheiben und ergeben eine trapezförmige Streugutverteilung gemäß Fig.8a. Beim Anschlussfahren findet eine Überlappung nur im Bereich der geneigten Flanken der Streugutverteilung statt und wird dort die Verteilung auf das lineare Plateau angehoben. In diesem Fall können die von den beiden Streuscheiben abgegebenen Streumengen unterschiedlich sein, um die Düngermenge dem Bodenbedarf anzupassen.

Fig.9 zeigt eine Einstellung für das halbseitige Streuen, wobei der Streuwinkel α wiederum auf den Wert α₁ reduziert wird, indem die Ausbreitung des Düngers auf der Streuscheibe 4 entgegen der Drehrichtung auf den Sektorwinkel γ₁ eingeengt und zugleich der Aufgabepunkt in Drehrichtung verlagert wird, während die Dosieröffnung für die Streuscheibe 5 geschlossen ist. Die Streugutverteilung stellt sich in diesem Fall als stark asymmetrisches Trapez gemäß Fig.9a dar.

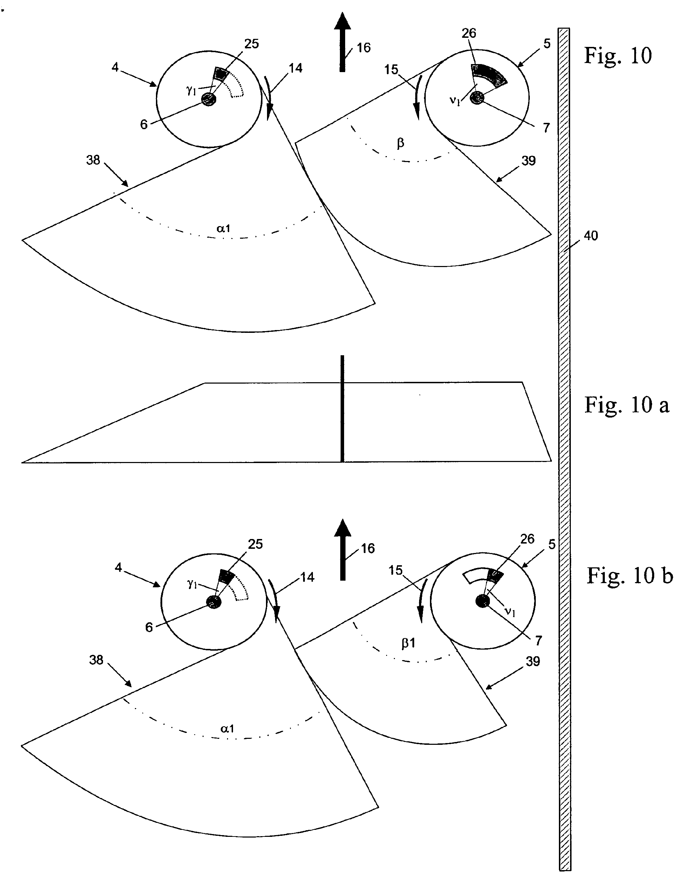

Fig.10 zeigt die Verhältnisse beim Streuen an einer symbolisch angedeuteten Feldgrenze 40. Der von der Streuscheibe 4 abgegebene Streufächer 38 entspricht bei gleicher Einstellung des Streuers auf der grenzfernen Seite im Wesentlichen dem der Fig.8 und 9, während bei der grenznahen Streuscheibe 5 die Wurfweite reduziert wird. Dies kann beispielsweise durch Absenken der Drehzahl und/oder durch Verlagerung des Sektorwinkels ϑ₁ entgegen der Drehrichtung geschehen. Es ergibt sich dann eine Streugutverteilung gemäß Fig.10a mit einer zur Grenze 40 steil abfallenden Flanke.

Die Arbeitsweise gemäß Fig.10b unterscheidet sich von der vorangegangenen dadurch, dass zusätzlich der Streuwinkel (Sektorwinkel) der Streuscheibe 5 von außen nach innen reduziert worden ist, so dass der Streufächer 39 weiter nach innen verlagert wird.

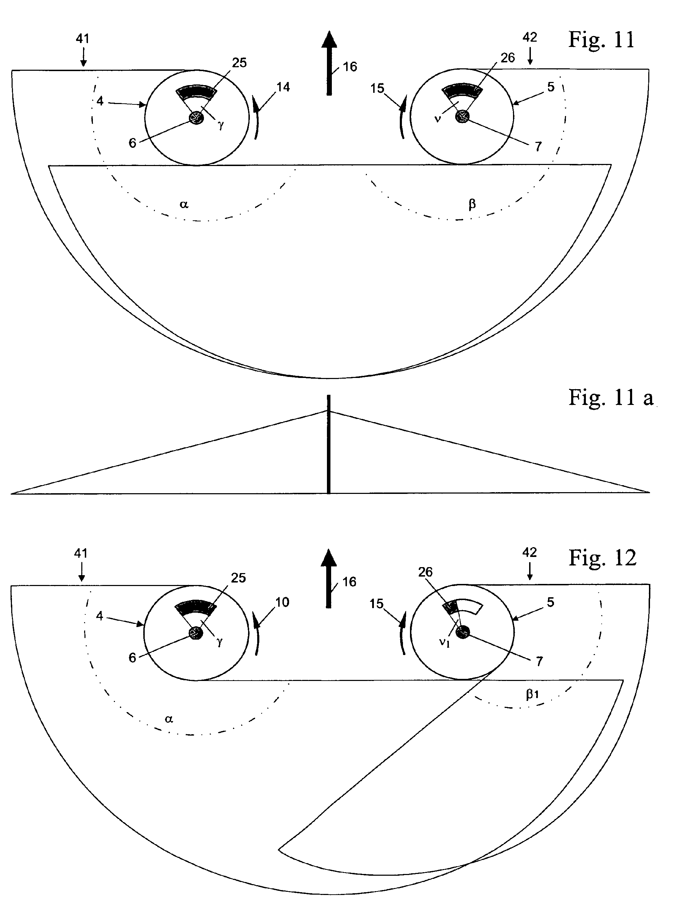

Die in Fig.11 bis 16 gezeigten Ausführungsbeispiele unterscheiden sich von denen der Fig.6 bis 10 nur durch den anderen Drehsinn der Streuscheiben 4, 5, die auf den einander zugekehrten Seiten in Fahrtrichtung 16 umlaufen (s. auch Fig.4). Beim Normalstreuen (Fig.11) überlappen sich auch hier die Streufächer 41, 42 weitestgehend. Der Streuwinkel jedes Streufächers beträgt beim Normalstreuen etwa 180°. Die Streugutverteilung gemäß Fig.11a ist auch hier dreieckförmig.

Um auch bei diesem Drehsinn der Streuscheiben eine asymmetrische Düngergabe zu ermöglichen (Fig.12), wird der Streuwinkel einer Streuscheibe - beim gezeigten Ausführungsbeispiel der Streuscheibe 5 - von innen nach außen reduziert, indem der Sektorwinkel des Ringsektors 26 auf der Streuscheibe gegen die Drehrichtung reduziert wird. Diese Arbeitsweise entspricht derjenigen gemäß Fig.7.

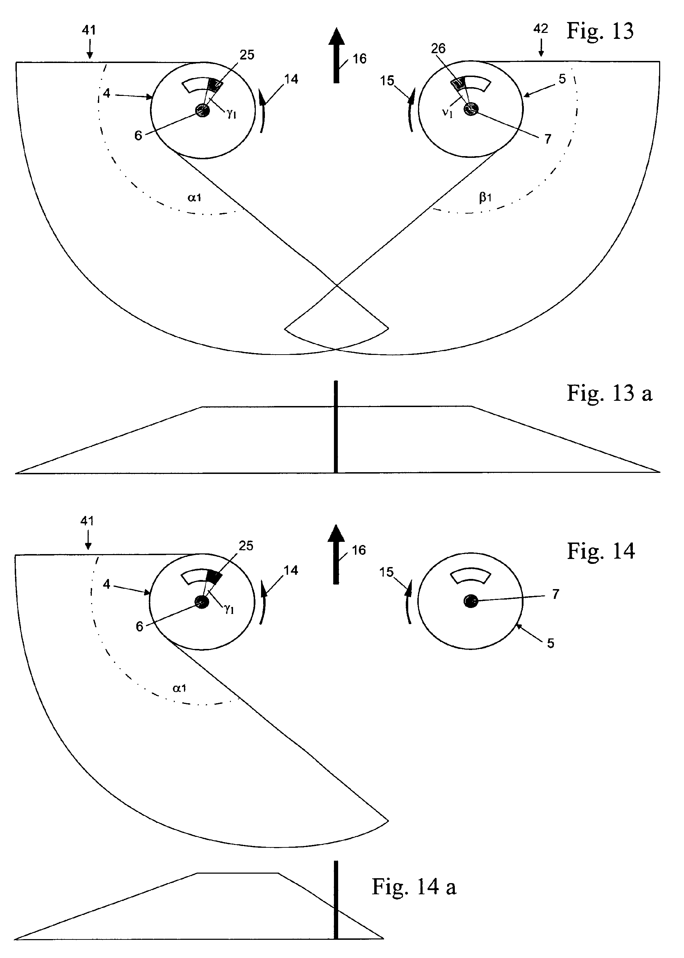

Bei dem Ausführungsbeispiel gemäß Fig.13 sind die Sektorwinkel γ₁, ϑ₁ beider Streuscheiben und damit die Streuwinkel α₁, β₁ von innen nach außen reduziert worden. Bei im Übrigen symmetrischer Ausbildung der Streufächer bezüglich der Fahrtrichtung 16 ergibt sich wiederum ein trapezförmiges Streubild, wie in Fig.13a gezeigt. In diesem Fall wird der Streuwinkel durch Reduzierung des Sektorwinkels erhalten, indem die Streugutbelegung mittels des Führungsorgans jeweils entgegen der Drehrichtung eingeengt wird.

In Fig.14 ist für diesen Drehsinn der Streuscheiben 4, 5 das halbseitige Streuen wiedergegeben, wobei die Dosieröffnung der Streuscheibe 5 geschlossen, die Streuscheibe also außer Funktion ist, während auf der anderen Streuscheibe 4 der Sektorwinkel wiederum entgegen der Drehrichtung reduziert worden ist. Es ergibt sich die in Fig.14a erkennbare trapezförmige Streugutverteilung mit starker Asymmetrie. Bei diesem halbseitigen Streuen findet beim Anschlussfahren eine Überlappung nur an der flachen Flanke gemäß Fig. 13a statt.

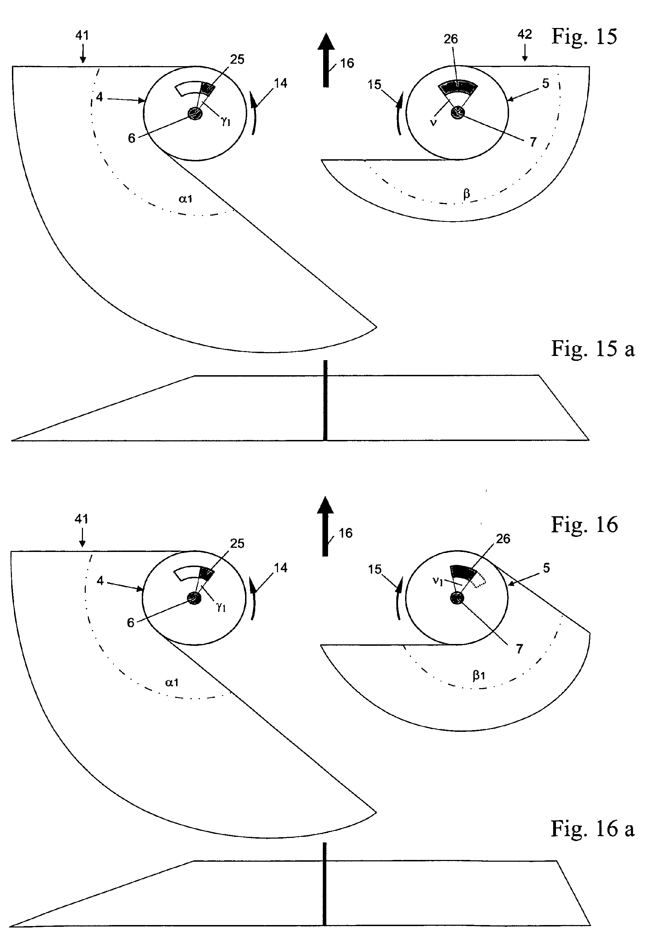

In Fig.15 und 16 ist ein Ausführungsbeispiel für das Grenzoder Randstreuen gezeigt. Der Streufächer 41 der grenzfernen Streuscheibe 4 wird lediglich im Streuwinkel durch Verkleinerung des Sektorwinkels reduziert, wie dies bereits in Bezug auf Fig.13 und 14 beschrieben ist. Die Streuscheibe 5 erzeugt einen Streufächer 42, der wiederum einen Streuwinkel von ca. 180° aufweist. Dabei ist jedoch die Wurfweite reduziert, beispielsweise durch Reduzierung der Drehzahl, durch Austausch der Streuscheibe gegen.eine solche mit anders ausgebildeten und/oder anders angeordneten Wurfflügeln oder durch Austausch lediglich der Wurfflügel selbst. Es entsteht eine Streugutverteilung gemäß Fig.15a mit einer zur Grenze steil abfallenden Flanke.

Bei dem Ausführungsbeispiel gemäß Fig.16 entspricht die Einstellung an der grenzfernen Streuscheibe und damit der Streufächer 41 der Streuscheibe 4 wiederum demjenigen der Fig.15, während der von der Streuscheibe 5 erzeugte Streufächer zusätzlich einen von außen nach innen reduzierten Streuwinkel β₁ aufweist, der beispielsweise durch Reduzieren des Sektorwinkels ϑ₁ gegen die Drehrichtung und die Verlagerung des Aufgabepunktes in Drehrichtung (gestrichelt angedeutet) erhalten wird. Hieraus ergibt sich ein zur Grenze noch steilerer Abfall der Streugutverteilung, wie in Fig.16a gezeigt ist.

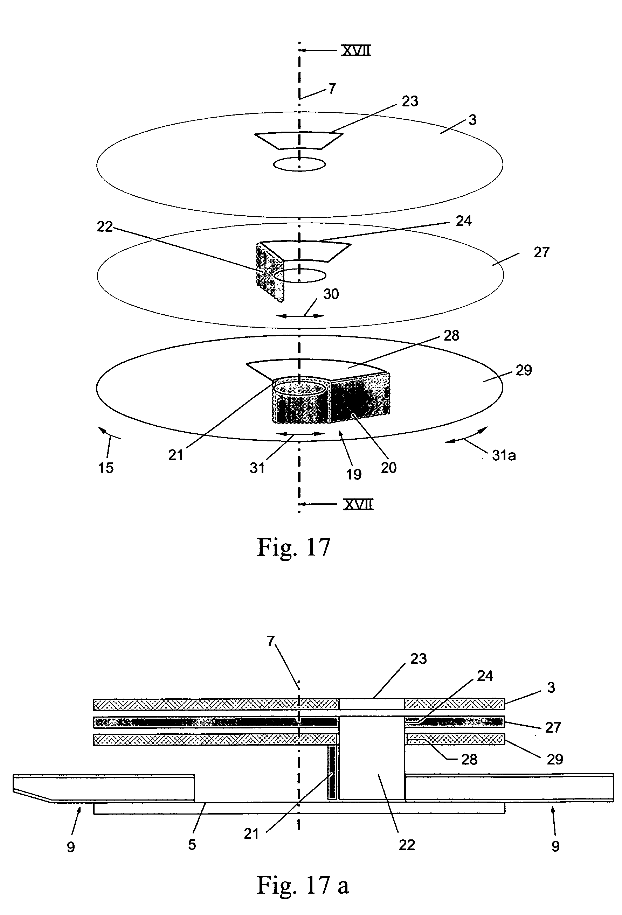

Fig.17 und 17a zeigen schematisch ein Ausführungsbeispiel für die Anordnung der Streugut-Führungseinrichtung 19 am rechten Boden 3 des Behälters 1 gemäß Fig.1. Der Boden ist als kreisförmige Bodenplatte 3 ausgebildet, deren Zentrum mit der Achse der Streuscheibe im gezeigten Ausführungsbeispiel mit der Achse 7 der Streuscheibe 5 (Fig.4) zusammenfällt. Es ist ferner die Drehrichtung 15 der Streuscheibe 15 unterhalb dieser Bodenplatte 3 gezeigt.

Die Bodenplatte 3 weist einen konzentrischen Ausschnitt auf, der die Auslauföffnung 23 bildet. Deren lichter Querschnitt bestimmt die maximal auslaufende Streugutmenge. Unterhalb der Bodenplatte 3 sind achsgleich eine Zwischenplatte 27 und eine Führungsplatte 29 untereinander angeordnet. Die Zwischenplatte 27 weist einen Ausschnitt 24 auf, dessen lichter Querschnitt etwa dem des Ausschnitts 23 in der Bodenplatte 3 entspricht. Die eine etwas radiale Kante (sie kann auch gekrümmt sein) bildet eine Dosierkante. Durch Verdrehen der Zwischenplatte in einer der durch den Doppelpfeil 30 angedeuteten Drehrichtung lässt sich die Dosieröffnung, d.h. die aktuelle Streumenge einstellen bzw. verändern. Die Führungsplatte 29 weist demgegenüber einen merklich größeren Ausschnitt 28 auf, durch dessen Form und Anordnung die maximale Aufgabefläche auf der Streuscheibe 5 (Fig.17a) vergeben ist.

An der Führungsplatte 29 ist ein Teil der Führungseinrichtung 19 fest angeordnet, nämlich das die Aufgabefläche (Ringsektor) radial begrenzende Leitelement 21 und das die Aufgabefläche (Ringsektor) in Umlaufrichtung begrenzende Führungsorgan 20, die beide zusammen mit der Führungsplatte 29 in Richtung des Doppelpfeils 31 drehbar sind, um den Ringsektor gegen das feste Leitorgan 22 zu verändern. Das Leitorgan 22 sitzt fest an der Zwischenplatte 27 an der der Dosierkante gegenüberliegenden radialen Begrenzung des Ausschnitts 24 und begrenzt und durchgreift den Ausschnitt 28 in der Führungsplatte 29. Die die Führungseinrichtung 19 bildenden Teile, nämlich das Führungsorgan 20, das innere Leitelement 21 und das im Wesentlichen radial verlaufende feste Leitorgan 22 enden mit ihrer Unterkante unmittelbar oberhalb der Streuscheibe 5, wie aus Fig.17a ersichtlich.

Zur Einstellung der Streumenge (Massenstrom) wurden die Zwischenplatte 27 und die Führungsplatte 29 gemeinsam gegenüber Bodenplatte 3 um die Achse 7 gemäß Doppelpfeil 30 verdreht, so dass sich die Überdeckung des Ausschnitts 24 in der Zwischenplatte und des Ausschnitts 23 in der Bodenplatte und damit der verbleibende freie Querschnitt ändert. Bei dieser Einstellung der Streumenge ändert sich die Einstellung der Führungseinrichtung nicht, d.h. das Streugut breitet sich auf der Streuscheibe 5 auf dem vorgegebenen, durch die Relativlage von Führungsorgan 20 und Leitorgan 22 eingestellten Ringsektor aus, der wiederum den Streuwinkel und damit die Lage und Form des Streufächers 42 in Fig.11 bestimmt. Zur Reduzierung des Streuwinkels von innen nach außen (Fig.12) wird das Führungsorgan 20 mit dem Leitelement 21 durch Drehen nur der Führungsplatte 29 gegen die Drehrichtung 15 und gegen das stehende Leitorgan 22 verstellt. Die Verstellmöglichkeit ist mit dem Doppelpfeil 31 angedeutet. Sie ist begrenzt zwischen der in Fig.17 gezeigten Stellung mit größtem Ringsektor und einer Stellung nahe am Leitorgan 22.

Um den Aufgabepunkt bei einer vorgegebenen Einstellung der Streumenge (Überdeckung der Ausschnitte 23, 24 von Bodenplatte 3 und Zwischenplatte 27) und vorgegebener Einstellung des Ringsektors (Streuwinkel) durch die Einstellung der Führungseinrichtung 19 lässt sich die gesamte Baueinheit aus Bodenplatte, Zwischenplatte und Führungsplatte verdrehen.

In einer Variante kann auch die Bodenplatte 3 am Behälter 1 drehbar gelagert sein und zusammen mit der Führungsplatte 29 unter Beibehaltung der eigenständigen Drehbarkeit der Zwischenplatte 27 in oder entgegen der Drehrichtung 15 der Streuscheibe drehend verlagert werden, um den Aufgabepunkt des Düngers auf der Streuscheibe zu verlagern.

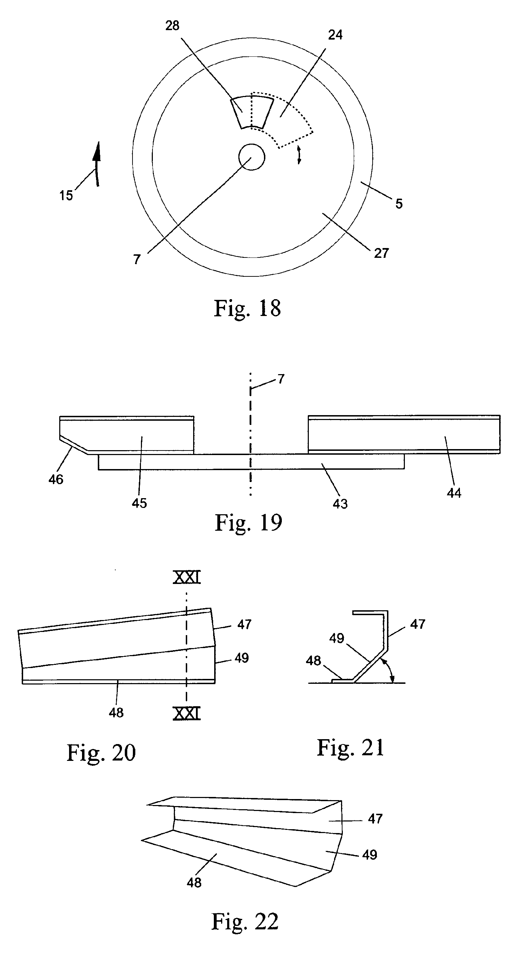

Die Zwischenplatte 27 mit dem Ausschnitt 24 wird, wie Fig.18 zeigt, entgegen der Drehrichtung 15 der ihr zugeordneten Streuscheibe 4 in die Öffnungslage bewegt, so dass der Flächenschwerpunkt des im Dosierquerschnitt auslaufenden Düngers entgegen der Drehrichtung nach außen wandert. Durch eine entsprechende gekrümmte Geometrie des Ausschnitts 28, z. B. in Nierenform, und einer gekrümmt verlaufenden Kante am Ausschnitt 24 kann der Flächenschwerpunkt zugleich nach außen wandern. Diese Maßnahmen zur Aufgabepunktverlagerung sind im Stand der Technik bekannt.

Fig.19 zeigt ein Ausführungsbeispiel einer ebenen Streuscheibe 43, auf der ein Paar von Wurfflügeln 44, 45 angeordnet ist. Die Wurfflügel sind vorzugsweise unterschiedlich lang. Der kürzere Wurfflügel 45 weist einen steileren Abwurfwinkel auf, wie dies mit der ansteigenden unteren Leitfläche 46 des Wurfflügels 45 dargestellt ist. Stattdessen kann der kürzere Wurfflügel 45 auch die in den Fig.20 bis 22 gezeigte Form, nämlich zwei Führungsflächen 47, 48 für den Dünger aufweisen, von denen die eine Führungsfläche 47 etwa senkrecht zur Ebene der Streuscheibe steht, während die untere Führungsfläche aus einen horizontalen Abschnitt 48 und einem unmittelbar anschließend Abschnitt 49 besteht, der unter einem mit Doppelpfeil in Fig.21 angedeuteten Winkel zwischen 40° und 60° zur Ebene der Streuscheibe 43 ansteigt und sich von innen nach außen verbreitet. Die Wurfflügel können mit Schnellverschlüssen auf der Streuscheibe befestigt sein, um ihren Anstellwinkel auf der Streuscheibe zu variieren.

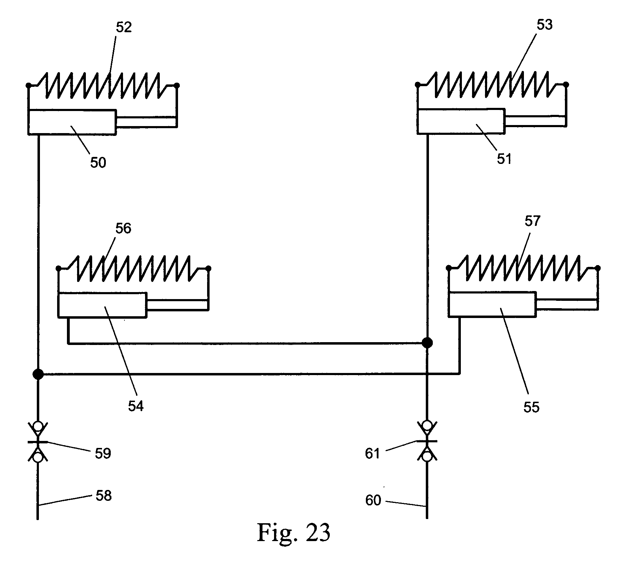

Fig.23 zeigt ein schematisches Steuerungskonzept für die die Dosierung ermöglichende, drehbare Zwischenplatte 27 und die drehbar gelagerte Führungseinrichtung 19 mit dem Führungsorgan 20 und dem'Leitelement 21. Jeder Seite des Streuers ist ein Hydraulikzylinder 50 bzw. 51 mit je einer Rückholfeder 52, 53 zugeordnet zur Steuerung der Dosieröffnung. Sie wirken auf die Zwischenplatte 27 mit dem Ausschnitt 24 in dem Sinne, dass die Dosieröffnung mit dem Hydraulikzylinder 50, 51 in die Schließlage und mit der Rückholfeder 52, 53 in die Öffnungslage bewegt wird.

Ferner sind jedem Führungsorgan 20 zur Einstellung des Sektorwinkels (Streuwinkels) ein Hydraulikzylinder 54, 55 und eine Rückholfeder 56, 57 zugeordnet, wobei die Ankopplung so getroffen ist, dass der Sektorwinkel mittels des Hydraulikzylinders verkleinert bzw. mit der Rückholfeder vergrößert wird. Der Hydraulikzylinder 50 der linken Seite und der Hydraulikzylinder 55 der rechten Seite sind gemeinsam an eine Traktorleitung 58 über einen Hydraulikstecker 59 angeschlossen. Gleichermaßen sind der Hydraulikzylinder 54 der linken Seite und der Hydraulikzylinder 51 der rechten Seite an eine Traktorleitung 60 über einen Hydraulikstecker 61 angeschlossen. Mit dieser Schaltung ist es beispielsweise möglich, die Dosieröffnung auf der einen Streuerseite zu schließen und zugleich den Streuwinkel auf der anderen Streuerseite zu verkleinern, beispielsweise zum halbseitigen Streuen mit einem Streubild, wie es in Fig.14 gezeigt ist. Auch jede Zwischenstellung lässt sich auf diese einfache Weise verwirklichen. Statt der Kombination von Hydraulikzylinder und Rückholfeder können auch nur hydraulisch oder elektrisch arbeitende Aktoren vorgesehen sein, die jede gewünschte steuerungstechnische Verknüpfung ermöglichen, um die Streumenge und den Streuwinkel rechnergesteuert einzustellen.

### Bezugszeichenliste

- 1: Behälter
- 2: Boden(platte)
- 3: Boden(platte)
- 4: Streuscheibe (links)
- 5: Streuscheibe (rechts)
- 6: Achse von 4
- 7: Achse von 5
- 8: Wurfflügel von 4
- 9: Wurfflügel von 6
- 10: äußeres Ende von 4, 5
- 11: inneres Ende von 4, 5
- 12: wurfflügelfreier Bereich von 4
- 13: wurfflügelfreier Bereich von 5
- 14: Drehrichtung von 4
- 15: Drehrichtung von 5
- 16: Fahrtrichtung
- 17: Aufgabefläche (projezierte Dosieröffnung) von 4
- 18: Aufgabefläche (projezierte Dosieröffnung)
- 19: Führungseinrichtung
- 20: Führungsorgan (verstellbar)
- 21: inneres Leitelement (verstellbar)
- 22: Leitorgan fest
- 23: Ausschnitt in Bodenplatte 3
- 24: Ausschnitt in Zwischenplatte 27
- 25: Ringsektor auf 4
- 26: Ringsektor auf 5
- 27: Zwischenplatte
- 29: Führungsplatte
- 30: Drehrichtung der Zwischenplatte 27
- 31: Drehrichtung des Führungsorgans 20
- 31a: Drehrichtung des Führungsorgans 20 mit dem Leitelement von Bodenplatte 3, Zwischenplatte 27 und Führungsplatte 29
- 32: Begrenzungslinie von 38
- 33: Begrenzungslinie von 38
- 34: Begrenzungslinie von 38
- 35: Begrenzungslinie von 39
- 36: Begrenzungslinie von 39
- 37: Begrenzungslinie von 39
- 38: linker Streufächer
- 39: rechter Streufächer
- 40: Feldrand
- 41: Streufächer
- 42: Streufächer
- 43: Streuscheibe
- 44: Wurfflügel
- 45: Wurfflügel
- 46: Leitfläche von 45
- 47: Führungsfläche
- 48: Führungsfläche
- 49: Abschnitt
- 50: Hydraulikzylinder links
- 51: Hydraulikzylinder rechts
- 52: Rückholfeder links
- 53: Rückholfeder rechts
- 54: Hydraulikzylinder links
- 55: Hydraulikzylinder rechts
- 56: Rückholfeder links
- 57: Rückholfeder rechts
- 58: Traktorleitung
- 59: Hydraulikstecker
- 60: Traktorleitung
- 61: Hydraulikstecker

## Patentansprüche

1. Verfahren zum Verteilen von Streugut mittels eines Zentrifugalstreuers mit einem Streugut-Behälter (1) und wenigstens zwei gegensinnig umlaufenden, mit Wurfflügeln (8, 9) versehenen Streuscheiben (4, 5), indem das Streugut über jeweils wenigstens ein steuerbares Dosierorgan am Behälter auf einen wurfflügelfreien inneren Bereich (12, 13) der Streuscheibe (4, 5) aufgegeben wird und sich im Zentrifugalfeld der Streuscheibe auf dieser ausbreitet, bis es von einem Wurfflügel an dessen innerem Ende (11) erfasst nach außen beschleunigt und an dessen äußerem Ende (10) unter einem großen Streuwinkel abgegeben wird derart, dass beim Normalstreuen auf einer einstellbaren Streubreite sich die von den beiden Streuscheiben (4, 5)erzeugten Streufächer (38, 39) in Fahrtrichtung (16) hinter dem Zentrifugalstreuer symmetrisch im Wesentlichen vollständig überlappen, **dadurch gekennzeichnet, dass** die Ausbreitung des Streugutes auf der wurfflügelfreien Fläche (12, 13) der Streuscheibe (4, 5) auf einen Ringsektor (25, 26) mit einem auf den größten Streuwinkel (α, β) abgestimmten Sektorwinkel (γ) begrenzt wird, und dass zur einseitigen Reduzierung der Überlappung der Streufächer der Streuwinkel wenigstens einer Streuscheibe durch Steuerung des Sektorwinkels von innen nach außen verkleinert wird, und dass zugleich der Streuwinkel und/oder die Streubreite an der anderen Streuscheibe reduziert wird.

2. Verfahren nach Anspruch 1, **dadurch gekennzeichnet, dass** auch der Streuwinkel der anderen Streuscheibe durch Steuerung des Sektorwinkels verkleinert wird.

3. Verfahren nach Anspruch 1 oder 2, **dadurch gekennzeichnet, dass** für das Normalstreuen das von dem Dosierorgan auf jede Streuscheibe (4, 5) aufgegebene Streugut mit einem Sektorwinkel im Bereich von 60° oder mehr an die Wurfflügel (8, 9) abgegeben und der Sektorwinkel zur Reduzierung der Überlappung verkleinert wird.

4. Verfahren nach einem der Ansprüche 1 bis 3, **dadurch gekennzeichnet, dass** das sich auf der wurfflügelfreien Fläche (12, 13) der Streuscheibe (4, 5) ausbreitende Streugut unmittelbar oberhalb der Streuscheibe wenigstens einseitig so geführt wird, dass der Sektorwinkel von einem größten Wert aus verkleinert werden kann.

5. Verfahren nach einem der Ansprüche 1 bis 4, **dadurch gekennzeichnet, dass** das sich auf der wurfflügelfreien Fläche (12, 13) der Streuscheibe (4, 5) ausbreitende Streugut unmittelbar oberhalb der Streuscheibe (4, 5) beidseitig geführt wird.

6. Verfahren nach einem der Ansprüche 1 bis 5, **dadurch gekennzeichnet, dass** das Streugut auf jede Streuscheibe (4, 5) von einem Dosierorgan mit zwei nebeneinanderliegenden Dosieröffnungen aufgegeben wird.

7. Verfahren nach einem der Ansprüche 1 bis 6, **dadurch gekennzeichnet, dass** zur Reduzierung des Streuwinkels der beiden Streuscheiben (4, 5) der Sektorwinkel an den Streuscheiben in einander entgegengesetzter Richtung verkleinert wird.

8. Verfahren nach einem der Ansprüche 1 bis 7, **dadurch gekennzeichnet, dass** bei Zentrifugalstreuern, deren Streuscheiben (4, 5) auf den einander zugekehrten Seiten in Fahrtrichtung (16) umlaufen, der Sektorwinkel auf der Seite mit dem reduzierten Streuwinkel entgegen der Drehrichtung (15) verkleinert wird.

9. Verfahren nach Anspruch 7 und 8, **dadurch gekennzeichnet, dass** die Sektorwinkel an beiden Streuscheiben (4, 5) entgegen der Drehrichtung (16) verkleinert werden.

10. Verfahren nach einem der Ansprüche 1 bis 7, **dadurch gekennzeichnet, dass** bei Zentrifugalstreuern, deren Streuscheiben (4, 5) auf den einander zugekehrten Seiten entgegen der Fahrtrichtung (16) umlaufen, der durch die Dosierorgane vorgegebene Aufgabepunkt des Streugutes auf der Streuscheibe in Drehrichtung verlagert und der Sektorwinkel auf der Seite des reduzierten Streuwinkels gegen die Drehrichtung verkleinert wird.

11. Verfahren nach Anspruch 10, **dadurch gekennzeichnet, dass** die Sektorwinkel an beiden Streuscheiben (4, 5) gegen die Drehrichtung verkleinert werden.

12. Verfahren nach einem der Ansprüche 1 bis 11, **dadurch gekennzeichnet, dass** zum halbseitigen Streuen das Dosierorgan auf einer Seite geschlossen wird und der Streuwinkel (α₁) auf der anderen Seite von innen nach außen durch Verkleinerung des Sektorwinkels reduziert und der Aufgabepunkt verlagert wird.

13. Verfahren nach einem der Ansprüche 1 bis 12, **dadurch gekennzeichnet, dass** zur Lageveränderung des Streuwinkels der Sektorwinkel an der Streuscheibe verlagert wird.

14. Verfahren nach einem der Ansprüche 1 bis 13, **dadurch gekennzeichnet, dass** zur einseitigen Reduzierung der Streubreite die Drehzahl der Streuscheibe (5) auf dieser Seite reduziert wird.

15. Verfahren nach Anspruch 14, **dadurch gekennzeichnet, dass** zugleich der Sektorwinkel an der Streuscheibe (5) entgegen der Drehrichtung verlagert wird, indem das Dosierorgan gegen die Drehrichtung der Streuscheibe verlagert wird.

16. Verfahren nach einem der Ansprüche 14 oder 15, **dadurch gekennzeichnet, dass** zugleich auf der anderen Seite der Streuwinkel von innen nach außen reduziert wird.

17. Verfahren nach einem der Ansprüche 1 bis 16, **dadurch gekennzeichnet, dass** zur einseitigen Reduzierung der Streubreite der Streufächer dieser Streuscheibe durch Leiteinrichtungen von außen nach innen eingeengt wird.

18. Verfahren nach Anspruch 17, **dadurch gekennzeichnet, dass** zugleich der Sektorwinkel reduziert wird.

19. Zentrifugalstreuer mit einem Streugutbehälter (1) und wenigstens zwei darunter angeordneten, gegensinnig umlaufenden, mit wenigstens je einem Wurfflügel (8, 9) versehenen Streuscheiben (4, 5), denen das Streugut über wenigstens je ein Dosierorgan mit einstellbarem Querschnitt aufgebbar ist und die das Streugut in zwei sich annähernd vollständig überlappenden Streufächern (38, 39) abgeben, wobei die Wurfflügel einen solchen Abstand von der Drehachse der Streuscheibe (4, 5) aufweisen, dass die Projektion des Dosierorgans in der durch diesen Abstand gebildeten wurfflügelfreien Ringfläche (12, 13) der Streuscheibe (4, 5) liegt und das aufgegebene Streugut sich im Zentrifugalfeld der Streuscheibe auf dieser ausbreitet, **dadurch gekennzeichnet, dass** unmittelbar oberhalb der Streuscheibe (4, 5) eine Führungseinrichtung (19) angeordnet ist, mittels der die Ausbreitung des Streugutes auf der Ringfläche (12, 13) auf einen Ringsektor mit einem Sektorwinkel von mindestens 60° bezüglich der Achse der Streuscheibe begrenzbar ist, und dass zur Reduzierung der Überlappung der Streufächer (38, 39) der Sektorwinkel reduzierbar ist.

20. Zentrifugalstreuer nach Anspruch 19, **dadurch gekennzeichnet, dass** die Führungseinrichtung (19) wenigstens ein gegenüber dem Dosierorgan in Drehrichtung der Streuscheibe (4, 5) versetzt angeordnetes Führungsorgan (20) aufweist, das den Sektorwinkel auf einen größten Wert begrenzt, und dass das Führungsorgan (20) zur Reduzierung des Sektorwinkels gegen die Drehrichtung (14, 15) verstellbar ist.

21. Zentrifugalstreuer nach Anspruch 19 oder 20, **dadurch gekennzeichnet, dass** die Führungseinrichtung (19) in Drehrichtung unmittelbar vor dem Dosierorgan ein den Sektorwinkel fest begrenzendes Leitorgan (22) aufweist.

22. Zentrifugalstreuer nach einem der Ansprüche 19 bis 21, **dadurch gekennzeichnet, dass** die Führungseinrichtung (19) eine die Ausbreitung des Streugutes zwischen dem Dosierorgan und der Drehachse (6, 7) der Streuscheibe (4, 5) begrenzendes Leitelement (21) aufweist.

23. Zentrifugalstreuer nach Anspruch 22, **dadurch gekennzeichnet, dass** das Leitelement (21) konzentrisch zur Drehachse (6, 7) der Streuscheibe (4, 5) ausgebildet ist.

24. Zentrifugalstreuer nach einem der Ansprüche 19 bis 23, **dadurch gekennzeichnet, dass** das Führungsorgan (20) und das konzentrische Leitelement (21) miteinander verbunden sind.

25. Zentrifugalstreuer nach Anspruch 24, **dadurch gekennzeichnet, dass** das Führungsorgan (20) und das konzentrische Leitelement (21) einteilig sind.

26. Zentrifugalstreuer nach einem der Ansprüche 19 bis 25, **dadurch gekennzeichnet, dass** das konzentrische Leitelement (21) zumindest auf dem Verstellweg des Führungsorgans (20) an dem festen Leitelement (22) geführt ist.

27. Zentrifugalstreuer nach einem der Ansprüche 19 bis 26, **dadurch gekennzeichnet, dass** sich das Führungsorgan (20) und beide Leitelemente (21, 22) im Wesentlichen zwischen der Streuscheibe (4, 5) und dem tiefsten Punkt des Streugut-Behälters (1) erstrecken.

28. Zentrifugalstreuer nach einem der Ansprüche 19 bis 27, **dadurch gekennzeichnet, dass** der Streugut-Behälter (1) einen um die Achse (6, 7) der Streuscheibe (4, 5) drehbaren Boden aufweist, der aus einer Bodenplatte (3) mit einer Auslauföffnung (23), einer darunter angeordneten, als Dosierschieber wirkenden Zwischenplatte (27) mit einer mit der Auslauföffnung korrespondierenden Durchlauföffnung (24) und einer darunter angeordneten Führungsplatte (29), an der das Führungsorgan (20) und das konzentrische Leitelement (21) der Führungseinrichtung (19) festgelegt sind und die eine mit der Durchlauföffnung (24) in der Zwischenplatte (27) korrespondierende, über den gesamten Verstellbereich des Führungsorgans (20) reichenden Ausschnitt (28) aufweist.

29. Zentrifugalstreuer nach Anspruch 28, **dadurch gekennzeichnet, dass** die Bodenplatte (3), die Zwischenplatte (27) und die Führungsplatte (29) zur Verlagerung des Aufgabepunktes gemeinsam verdrehbar sind.

30. Zentrifugalstreuer nach Anspruch 28, **dadurch gekennzeichnet, dass** die Zwischenplatte (27) und die Führungsplatte (29) zur Änderung der Streumenge gemeinsam gegenüber der Bodenplatte (3) verdrehbar sind.

31. Zentrifugalstreuer nach einem der Ansprüche 28 bis 30, **dadurch gekennzeichnet, dass** die Führungsplatte (29) und die Zwischenplatte (27) zur Änderung des Streuwinkels relativ zueinander drehbar sind.

32. Zentrifugalstreuer nach einem der Ansprüche 19 bis 31, **dadurch gekennzeichnet, dass** das Führungsorgan (20) der Führungseinrichtung (19) einen gegenüber einer Radialen der Streuscheibe in Drehrichtung geneigten Anstellwinkel aufweist.

33. Zentrifugalstreuer nach einem der Ansprüche 19 bis 32, **dadurch gekennzeichnet, dass** das Dosierorgan für eine Streuscheibe (4, 5) und das Führungsorgan (20) für die andere Streuscheibe steuerungstechnisch jeweils derart verknüpft sind, dass beim Schließen des Dosierorgans das Führungsorgan (20) für die andere Streuscheibe (5, 4) auf einen kleineren Sektorwinkel eingestellt wird.

34. Zentrifugalstreuer nach einem der Ansprüche 19 bis 33, **dadurch gekennzeichnet, dass** die Einrichtung zur Reduzierung der Streubreite und das Führungsorgan (20) steuerungstechnisch jeweils derart verknüpft sind, dass bei einer Reduzierung der Streubreite auf einer Seite das Führungsorgan auf der anderen Seite auf einen kleineren Sektorwinkel eingestellt wird.

35. Zentrifugalstreuer nach einem der Ansprüche 19 bis 34, **dadurch gekennzeichnet, dass** dem Dosierorgan und dem Führungsorgan (20) Stellglieder in Form hydraulischer und/oder elektrischer Aktoren zugeordnet sind, die steuerungstechnisch miteinander verknüpft sind.

36. Zentrifugalstreuer nach einem der Ansprüche 19 bis 34, **dadurch gekennzeichnet, dass** dem Führungsorgan (20) als Stellglied ein einfach wirkender Hydraulikzylinder (48, 49) mit Rückholfeder (50, 51), die das Führungsorgan in die Position mit größtem Sektorwinkel drängt, zugeordnet ist.

37. Zentrifugalstreuer nach einem der Ansprüche 19 bis 34, **dadurch gekennzeichnet, dass** dem Dosierorgan als Stellglied ein einfach wirkender Hydraulikzylinder (44, 45) mit Rückholfeder (46, 47), die das Dosierorgan in die Öffnungsstellung drängt, zugeordnet ist.

38. Zentrifugalstreuer nach einem der Ansprüche 19 bis 37, **dadurch gekennzeichnet, dass** die Stellglieder für das Dosierorgan und das Führungsorgan über eine Programmsteuerung regelbar verknüpft sind.

39. Zentrifugalstreuer nach einem der Ansprüche 19 bis 38, **dadurch gekennzeichnet, dass** das Stellglied für das Dosierorgan mit einem Stellglied für die Verlagerung des Aufgabepunktes über eine Programmsteuerung regelbar verknüpft sind.

40. Zentrifugalstreuer nach einem der Ansprüche 19 bis 39, **dadurch gekennzeichnet, dass** das Stellglied für das Führungsorgan mit einem Stellglied für die Drehzahl der Streuscheibe über eine Programmsteuerung regelbar verknüpft sind.

41. Zentrifugalstreuer nach einem der Ansprüche 19 bis 34, und 36 bis 40, **dadurch gekennzeichnet, dass** dem Dosierorgan und/oder dem Führungsorgan und/oder der Einrichtung zur Verlagerung des Aufgabepunktes als Stellglieder elektrische Aktoren mit oder ohne Lagerrückmeldung zugeordnet sind.

42. Zentrifugalstreuer nach einem der Ansprüche 19 bis 41, **dadurch gekennzeichnet, dass** für das Grenz- oder Randstreuen die Drehzahl der grenznahen Streuscheibe und der Sektorwinkel an der grenzfernen Streuscheibe gemeinsam reduzierbar sind.

43. Zentrifugalstreuer nach Anspruch 42, **dadurch gekennzeichnet, dass** zugleich der Aufgabepunkt auf der grenznahen Streuscheibe entgegen der Drehrichtung verlagerbar ist.

44. Zentrifugalstreuer nach einem der Ansprüche 19 bis 43, **dadurch gekennzeichnet, dass** die Wurfflügel der Streuscheiben in Länge und Lage spiegelbildlich gleich angeordnet sind.

45. Zentrifugalstreuer nach einem der Ansprüche 19 bis 44, **dadurch gekennzeichnet, dass** die Wurfflügel der Streuscheiben paarweise gleich sind.

46. Zentrifugalstreuer nach einem der Ansprüche 19 bis 45, **dadurch gekennzeichnet, dass** die Wurfflügel (44, 45) jeder Streuscheibe (43) unterschiedlich lang und der jeweils kürzere Wurfflügel entgegen der Drehrichtung stärker zurückgestellt ist.

47. Zentrifugalstreuer nach Anspruch 46, **dadurch gekennzeichnet, dass** der kürzere Wurfflügel (45) zumindest im Bereich seines äußeren Endes einen steileren Abwurfwinkel als der längere (44) aufweist.

48. Zentrifugalstreuer nach einem der Ansprüche 19 bis 36, **dadurch gekennzeichnet, dass** bei einer ebenen Streuscheibe (43) wenigstens ein Wurfflügel zwei Führungsflächen (47, 48, 49) für das Streugut aufweist, von denen eine (47) etwa senkrecht zur Ebene der Streuscheibe (43), die andere untere Führungsfläche (49) einen Abschnitt aufweist, der unter einem Winkel zwischen 40 bis 60° zur Ebene der Streuscheibe (43) angeordnet ist und sich von innen nach außen verbreitert.

49. Zentrifugalstreuer nach einem der Ansprüche 19 bis 48, **dadurch gekennzeichnet, dass** für verschiedene Arbeitsbreiten verschiedene Wurfflügel vorgesehen sind.

50. Zentrifugalstreuer nach einem der Ansprüche 19 bis 48, **dadurch gekennzeichnet, dass** die Wurfflügel mit Schnellverschlüssen an der Streuscheibe auswechselbar festgelegt sind.

51. Zentrifugalstreuer nach einem der Ansprüche 19 bis 50 mit je einem den Dosierorganen für beide Streuscheiben zugeordneten und im Behälter angeordneten Rührwerk, **dadurch gekennzeichnet, dass** jedes Rührwerk von einem im Behälter angeordneten Hydromotor angetrieben ist.

52. Zentrifugalstreuer nach Anspruch 51, **dadurch gekennzeichnet, dass** die Hydromotoren unabhängig voneinander drehzahlsteuerbar sind.

53. Zentrifugalstreuer nach einem der Ansprüche 19 bis 52, **dadurch gekennzeichnet, dass** bei Streuscheiben (4, 5), die an den einander zugekehrten Seiten entgegen der Fahrtrichtung (16) umlaufen, der Abstand der Drehachsen (6, 7) der Streuscheiben wenigstens 10cm größer als der äußere Flugkreisdurchmesser der Streuscheiben ist.

54. Zentrifugalstreuer nach einem der Ansprüche 19 bis 52, **dadurch gekennzeichnet, dass** der Abstand der Drehachsen wenigstens 50cm größer als der äußere Flugkreisdurchmesser der Streuscheiben ist.

55. Zentrifugalstreuer nach einem der Ansprüche 19 bis 52, **dadurch gekennzeichnet, dass** der Abstand der Drehachsen wenigstens 80cm größer als der äußere Flugkreisdurchmesser der Streuscheiben ist.

56. Zentrifugalstreuer nach einem der Ansprüche 19 bis 52, **dadurch gekennzeichnet, dass** der Abstand der Drehachsen wenigstens doppelt so groß ist wie der äußere Flugkreisdurchmesser der Streuscheiben.
